# EUROPEAN PATENT SPECIFICATION

(11) **EP 3 725 191 B1**
(45) Date of publication and mention of the grant of the patent: **08.12.2021**
(21) Application number: 19170108.5
(22) Date of filing: 18.04.2019
(51) Int. Cl.: A47J 31/40, A47J 31/18

(54) **CAPSULE OPENER UNIT FOR A COFFEE MACHINE**
KAPSELÖFFNER FÜR KAFFEEMASCHINE
DISPOSITIF D'OUVERTURE DE CAPSULE POUR MACHINE À CAFÉ

(43) Date of publication of application: 21.10.2020
(73) Proprietor: Research, Investment & Development S.A.L. (Holding), Beirut (LB)
(72) Inventor: AL NAJJAR, George Michel, Beirut (LB)
(74) Representative: Viering, Jentschura & Partner mbB Patent- und Rechtsanwälte

(56) References cited:
- US-A1- 2015 017 288
- US-A1- 2015 147 448

## Description

The invention relates to a capsule opener unit for a coffee machine, e.g. a capsule opener unit for a coffee machine for opening single-serve coffee capsules.

Generally, capsules containing a beverage ingredient (e.g. coffee) are usually designed as single-serve containers being entirely sealed to environmental influences. Accordingly, it may be necessary to open the sealed container/capsule by means of an appropriate opener, which may optionally be mounted to/in a coffee machine, so as to allow preparing the beverage (e.g. the coffee).

A capsule opener unit is known from US-A-2015/0147448.

It is an object of the invention to provide a cost-efficient capsule opener unit for a coffee machine allowing the opening of capsules for preparing coffee (e.g. Lebanese-type or traditional (e.g. Greek-type, Cypriot-type or Turkish-type) coffee) in an easy and reliable manner.

The invention provides a capsule opener unit according to independent claim 1. Further embodiments of the invention are described in the dependent claims.

In this respect, a capsule opener unit for a coffee machine comprises a unit frame, a lid which is mounted to the unit frame so as to be rotatable relative to the unit frame about a first rotational axis, a capsule accommodating unit which comprises a support frame which is mounted to the unit frame so as to be rotatable relative to the unit frame about the first rotational axis, and a capsule receiving seat which is mounted to the support frame via a linear guiding device so as to be co-rotatable with the support frame (relative to the unit frame about the first rotational axis) and to be moveable relative to the support frame in a linearly guided manner along a linear moving direction which is transverse (e.g. perpendicular) to the first rotational axis, a first actuating arm which is mounted to the unit frame so as to be rotatable relative to the unit frame about a second rotational axis being parallel to the first rotational axis and which cooperates, on the one hand, with a first cam of the lid and, on the other hand, with the capsule receiving seat such that, when the lid is rotated (about the first rotational axis) from a first rotational position (e.g. a lid initial position) to a second rotational position (e.g. a first intermediate position), the first cam causes the first actuating arm to rotate (e.g. in a rotational direction opposite to a/the rotational direction of the lid) and to thereby cause the capsule receiving seat to linearly move from a capsule insertion position, in which a capsule can be inserted into the capsule receiving seat, to a capsule accommodation position, in which the capsule, when inserted, is finally accommodated in the capsule receiving seat for being further processed, a second actuating arm which is mounted to the unit frame so as to be rotatable relative to the unit frame about a third rotational axis being parallel to the first rotational axis (and, correspondingly, to the second rotational axis) and which, on the one hand, cooperates with a second cam of the lid and, on the other hand, has a clamping arm portion for cooperating with a tongue of a capsule cover foil of the capsule accommodated in the capsule receiving seat (e.g. and which (capsule) has been inserted such that the tongue of the capsule cover foil faces in the linear moving direction and towards the capsule accommodation position) such that, when the lid is further rotated (about the first rotational axis) from the second rotational position to a third rotational position (e.g. a second intermediate position), the second cam causes the second actuating arm to rotate (e.g. in a rotational direction opposite to a/the rotational direction of the lid) and to thereby cause the clamping arm portion to correspondingly rotate towards a counterpart, fixedly mounted to the unit frame, to a clamping position, in which the clamping arm portion is able to fixedly clamp said tongue against said counterpart, wherein the lid has a third cam which can cooperate with a complementary part of the support frame, wherein, when the lid is further rotated (about the first rotational axis) from the third rotational position to a fourth rotational position (e.g. a lid final position), the second cam further cooperates with the second actuating arm such that the clamping arm portion is kept in its clamping position, and the third cam engages the complementary part of the support frame such that the support frame is co-rotated with the lid, thereby allowing to automatically peel off the capsule cover foil from the capsule accommodated in the capsule receiving seat and to rotate said capsule into an emptying position, in which a content of said capsule can vertically fall out therefrom.

The first rotational position of the lid may be angularly spaced from the fourth rotational position by an angular range of 90° (+/- tolerances) to 180° (+/- tolerances) (e.g. an angular range of 90° (+/- tolerances) to 130° (+/tolerances)), wherein, optionally, the first rotational position of the lid is angularly spaced from the fourth rotational position by 105° (+/- tolerances). An angular space between the first and the second rotational position may be in range of 1/7 ± 10% (e.g. in range of 1/7 ± 5%) of the angular space between the first rotational position and the fourth rotational position (e.g., in case of the angular space between the first rotational position and the fourth rotational position being 105°, the angular space between the first and the second rotational position may be 15° (+/tolerances)). An angular space between the second and the third rotational position may be in range of 1/7 ± 10% (e.g. in range of 1/7 ± 5%) of the angular space between the first rotational position and the fourth rotational position (e.g., in case of the angular space between the first rotational position and the fourth rotational position being 105°, the angular space between the second and the third rotational position may be 15° (+/- tolerances)). An angular space between the third and the fourth rotational position may be in range of 5/7 ± 10% (e.g. in range of 5/7 ± 5%) of the angular space between the first rotational position and the fourth rotational position (e.g., in case of the angular space between the first rotational position and the fourth rotational position being 105°, the angular space between the third and the fourth rotational position may be 75° (+/tolerances)).

The support frame may have a first and a second longitudinal groove formed therein for cooperating with opposite edge portions (e.g. on the sides) of the capsule (e.g. opposite side edge portions of the capsule), which grooves are spaced from each other in a direction parallel to the first rotational axis and extend (e.g. along a direction being) parallel to the linear moving direction of the capsule receiving seat, and which, when the capsule is inserted into the capsule receiving seat in the capsule insertion position, can receive said opposite edge portions of the capsule and can keep them received when the capsule receiving seat is linearly moved from the capsule insertion position to the capsule accommodation position (along the linear moving direction), to thereby prevent the capsule from escaping from the capsule receiving seat in a direction transverse to the linear moving direction.

The capsule accommodating unit may further comprise a first retaining arm which is mounted to the support frame so as to be rotatable relative to the support frame about a fourth rotational axis, which, optionally, is transverse (e.g. perpendicular) to both the first rotational axis and said linear moving direction, and which cooperates with a first cam of the capsule receiving seat such that, when the capsule receiving seat linearly moves from the capsule insertion position to the capsule accommodation position, the first cam of the capsule receiving seat causes the first retaining arm to rotate from a capsule receiving position, in which the capsule can be inserted into the capsule receiving seat, to a capsule retaining position, in which the capsule, when inserted, is finally accommodated in the capsule receiving seat and is prevented, by the first retaining arm, from escaping from the capsule receiving seat in a direction parallel to the linear moving direction.

The capsule accommodating unit may further comprise a first retaining arm spring between the first retaining arm and the support frame, by which the first retaining arm is biased towards its capsule receiving position to thereby ensure that, when the capsule receiving seat linearly moves from the capsule accommodation position to the capsule insertion position, the first retaining arm rotates (back) to its capsule receiving position (about the fourth rotational axis) such as to allow reliably releasing the (e.g. emptied) capsule from the first retaining arm (e.g. such that the capsule can escape/be moved in a/the direction parallel to the linear moving direction).

The capsule accommodating unit may further comprise a second retaining arm which is mounted to the support frame so as to be rotatable relative to the support frame about a fifth rotational axis, which, optionally, is transverse (e.g. perpendicular) to both the first rotational axis and said linear moving direction and/or is parallel to the fourth rotational axis, wherein the first retaining arm and the second retaining arm, taken along the first rotational axis, are positioned on opposite sides with respect to a center of the capsule receiving seat, and wherein the second retaining arm cooperates with a second cam of the capsule receiving seat such that, when the capsule receiving seat linearly moves from the capsule insertion position to the capsule accommodation position, the second cam of the capsule receiving seat causes the second retaining arm to rotate (e.g. in a rotational direction opposite to a/the rotational direction of the first retaining arm, and/or e.g. in a simultaneous manner with respect to the first retaining arm) from a further capsule receiving position, in which the capsule can be inserted into the capsule receiving seat, to a further capsule retaining position, in which the capsule, when inserted, is finally accommodated in the capsule receiving seat and is prevented, by the second retaining arm (in cooperation with the first retaining arm), from escaping from the capsule receiving seat in a direction parallel to the linear moving direction.

The capsule accommodating unit may further comprise a second retaining arm spring between the second retaining arm and the support frame, by which the second retaining arm is biased towards its capsule receiving position to thereby ensure that, when the capsule receiving seat linearly moves from the capsule accommodation position to the capsule insertion position, the second retaining arm rotates (back) to its capsule receiving position (about the fifth rotational axis) (e.g. in a simultaneous manner with respect to the first retaining arm) such as to allow reliably releasing the (e.g. emptied) capsule from the second retaining arm (e.g. such that the capsule can escape/be moved in a/the direction parallel to the linear moving direction).

The capsule opener unit may further comprise a lock unit comprising a locking latch, which is mounted to the support frame so as to be moveable relative to the support frame, optionally rotatable relative to the support frame about a sixth rotational axis being parallel to the first rotational axis, and to be biased in a locking direction by a locking spring of the lock unit, wherein the locking latch cooperates with a locking recess of the capsule receiving seat such that, when the capsule receiving seat is linearly moved in the capsule accommodation position, the locking latch latches into the locking recess to thereby retain the capsule receiving seat in the capsule accommodation position, wherein, optionally, the lid comprises a fourth cam which cooperates with the locking latch such that, when the lid is rotated from the second rotational position to the first rotational position, the fourth cam causes the locking latch to be released from the locking recess thereby allowing the capsule receiving seat to linearly move from the capsule accommodation position to the capsule insertion position.

The linear guiding device may comprise at least one elongated bar (e.g. two elongated bars, which e.g., taken along the first rotational axis, are positioned on opposite sides with respect to a/the center of the capsule receiving seat), onto which the capsule receiving seat is mounted in a manner so as to be linearly guided by the elongated bar along the linear moving direction (when the capsule receiving seat is linearly moved), wherein, optionally, a restoring spring is connected between the support frame and the capsule receiving seat to bias the capsule receiving seat towards the capsule insertion position. Further, the capsule receiving seat may comprise at least one mounting protrusion (e.g. two mounting protrusions, e.g. which, taken along the first rotational axis, are positioned on opposite sides with respect to a/the center of the capsule receiving seat), which corresponds (correspond) to the respective elongated bar of the linear guiding device and via which the capsule receiving seat is mounted to the respective elongated bar (and, hence, to the linear guiding device) .

The first actuating arm may comprise a free end portion and an engagement path for being engaged by the first cam so as to allow the first cam to cooperate with the first actuating arm via the engagement path for the rotation of the first actuating arm (about the second rotational axis), wherein the engagement path extends between the second rotational axis and the free end portion and extends underneath the first rotational axis taken along the linear moving direction, wherein, taken along a transverse direction which is transverse (e.g. perpendicular) to both the first rotational axis and said linear moving direction, the second rotational axis and the free end portion of the first actuating arm are positioned on opposite sides with respect to the first rotational axis, and wherein the free end portion of the first actuating arm is configured to be engaged with a first engagement portion of the capsule receiving seat such that, when the first actuating arm is caused by the first cam to rotate (about the second rotational axis), the first actuating arm, via the engagement between its free end portion and the first engagement portion, causes the capsule receiving seat to linearly move from the capsule insertion position to the capsule accommodation position.

The engagement path of the first actuating arm may have a concave course facing the first rotational axis (e.g. with respect to the first rotational axis) (i.e. the course of the engagement path is concave as seen from the first rotational axis), and/or the first cam may comprise an engagement protrusion and a first cam spring, by which the engagement protrusion of the first cam is biased against the engagement path of the first actuating arm, and/or a spring (e.g. a coil spring, e.g. a torsion spring) may be connected between the first actuating arm and the unit frame, by which the first actuating arm is biased towards a first actuating arm initial position, which is occupied by the first actuating arm when the lid is in the first rotational position, (e.g. and towards the first cam, optionally, towards the engagement protrusion of the first cam) to thereby maintain engagement between the first cam and the engagement path of the first actuating arm, optionally, between the engagement protrusion and the engagement path of the first actuating arm.

The first actuating arm may have a surface which faces towards the first rotational axis and which defines the engagement path of the first actuating arm, or the first actuating arm may have an elongated slot formed therein which defines the engagement path of the first actuating arm, wherein the first cam may comprise a sliding block (e.g. coupled to the engagement protrusion of the first cam), via which the first cam is engaged with the elongated slot (e.g. by the sliding block being slidably accommodated in the elongated slot) to thereby allow the cooperation between the first actuating arm and said first cam.

The second actuating arm may comprise a free end portion and an engagement path for being engaged by the second cam so as to allow the second cam to cooperate with the second actuating arm via the engagement path for, firstly, the rotation of the second actuating arm and the corresponding rotation of the clamping arm portion to the clamping position (both about the third rotational axis) and, secondly, for allowing the clamping arm portion to be kept in the clamping position, wherein the engagement path extends between the third rotational axis and the free end portion and extends underneath the second rotational axis (and, correspondingly, underneath the first rotational axis) taken along the linear moving direction, wherein, taken along a transverse direction which is transverse (e.g. perpendicular) to both the first rotational axis and said linear moving direction, the third rotational axis and the free end portion are positioned on opposite sides with respect to the first rotational axis.

The engagement path of the second actuating arm may have a concave course facing the first rotational axis (e.g. with respect to the first rotational axis) (i.e. the course of the engagement path is concave as seen from the first rotational axis), and/or the second cam may comprise an engagement protrusion and a second cam spring, by which the engagement protrusion of the second cam is biased against the engagement path of the second actuating arm, and/or a spring (e.g. a coil spring, e.g. a torsion spring) may be connected between the second actuating arm and the unit frame, by which the second actuating arm is biased towards a second actuating arm initial position, which is occupied by the second actuating arm when the lid is in the first or in the second rotational position, (e.g. and towards the second cam, optionally, towards the engagement protrusion of the second cam) to thereby maintain engagement between the second cam and the engagement path of the second actuating arm, optionally, between the engagement protrusion of the second cam and the engagement path of the second actuating arm.

The second actuating arm may have a surface which faces towards the first rotational axis and which defines the engagement path of the second actuating arm, or the second actuating arm may have an elongated slot formed therein which defines the engagement path of the second actuating arm, wherein the second cam may comprise a sliding block (e.g. coupled to the engagement protrusion of the second cam), via which the second cam is engaged with the elongated slot (e.g. by the sliding block being slidably accommodated in the elongated slot) to thereby allow the cooperation between the second actuating arm and said second cam.

The capsule opener unit may further comprise a magnetic element (e.g. a permanent magnet, e.g. an electromagnet) which is arranged on the unit frame or on the capsule accommodating unit, and a corresponding counter-element which is arranged on the capsule accommodating unit or on the unit frame, respectively, wherein the magnetic element and the corresponding counter-element cooperate such as to hold the capsule accommodating unit on the unit frame via magnetic force when the lid is in any one of the first to third rotational positions, and such as to release the capsule accommodating unit from the unit frame when the lid is further rotated from the third rotational position towards its fourth rotational position (e.g. a rotational force caused by further rotating the lid from the third rotational position towards its fourth rotational position is greater than said magnetic force to thereby forcibly release said capsule accommodating unit from the unit frame). Accordingly, the magnetic element and the corresponding counter element may prevent undesired movements/rotations of the capsule accommodating unit, when the lid is in any one of the first to third rotational positions, to thereby enhance the reliability of the clamping arm portion fixing the tongue of the capsule cover foil of the capsule, when inserted.

The capsule accommodating unit may further comprise a tongue guiding member fixedly mounted to the support frame and protruding therefrom to the counterpart in a concave (e.g. as seen from the first rotational axis) and/or inclined manner to thereby allow guiding the tongue of the capsule cover foil of the capsule onto the counterpart when the capsule receiving seat is linearly moved from the capsule insertion position to the capsule accommodation position (e.g. such that said tongue can be in position to be fixedly clamped against said counterpart by the clamping arm portion), and wherein the tongue guiding member comprises a free end portion oriented towards the counterpart and provided in a fork shape with two fork legs spaced by a recess therebetween. The free end portion of the tongue guiding member may be oppositely arranged to where the tongue guiding member is fixedly mounted to the support frame (e.g. with respect to a direction being transverse (e.g. perpendicular) to the first rotational axis and the linear moving direction). The fork legs may be directly and/or adjacently located on the counterpart, when the capsule receiving seat is in the capsule insertion position.

The clamping arm portion may comprise one or more spikes (e.g. fixedly attached to or integrally formed with the clamping arm portion) being disposed such that the spikes face towards the counterpart in the clamping position, wherein, optionally, the counterpart comprises one or more recesses (e.g. formed in the counterpart) corresponding to the one or more spikes and being configured to be engaged by the one or more spikes in the clamping position (thereby allowing the tongue of the capsule cover foil of the capsule being clamped in a reliable manner).

The capsule opener unit as described in this application is not restricted to comprising (only) one first and/or (only) one second actuating arm but may also comprise more than one (i.e. one or more, e.g. two, e.g. a pair of) first actuating arm(s) and/or more than one (i.e. one or more, e.g. two, e.g. a pair of) second actuating arm(s). The same also applies to the respective elements/members, with which the respective (first and/or second) actuating arm cooperates (e.g. the first and/or the second cam of the lid, and/or e.g. the (first) engagement portion of the capsule receiving seat) and which may also be correspondingly provided as more than one (i.e. as one or more, e.g. as two, e.g. as a pair) respectively depending on the (corresponding) number of the first and/or the second actuating arm(s). In this regard, in a non-restricting example, the capsule opener unit may be configured so as to be (e.g. substantially, or e.g. for the most part) mirror symmetric with respect to a plane extending through a/the center of the capsule receiving seat and being perpendicular to the first rotational axis. In this respect, the capsule opener unit may comprise a pair of first actuating arms, one of which being the first actuating arm as described above and the other one being provided in the manner as said one first actuating arm, wherein said first actuating arms are separate from each other or are integrally connected to each other, and, taken along the second rotational axis, are positioned on opposite sides with respect to the capsule receiving seat, wherein said other one first actuating arm cooperates with a further first cam of the lid in the manner as the first actuating arm cooperates with the first cam, wherein the capsule receiving seat may further comprise a second engagement portion provided in the manner as the first engagement portion (as described above) such as to cooperate with said other one first actuating arm, and/or wherein the capsule opener unit may comprise a pair of second actuating arms, one of which being the second actuating arm as described above and the other one being provided in the manner as said one second actuating arm, wherein both said second actuating arms are fixedly attached to or integrally formed with the clamping arm portion, and, taken along the third rotational axis, are positioned on opposite sides with respect to the clamping arm portion, wherein said other one second actuating arm cooperates with a further second cam of the lid in the manner as the second actuating arm cooperates with the second cam (as described above).

The lid may be manually rotated between any two of the first to fourth rotational positions of the lid, or the capsule opener unit may further comprise an electric motor (e.g. a single electric motor) connectable to a power source and a power transmission device configured to allow transference of a rotational force from the electric motor to the lid so that the lid is automatically rotatable about the first rotational axis between any two of the first to fourth rotational positions of the lid.

The invention also provides a coffee machine which comprises the capsule opener unit as described above. The coffee machine may further comprise a machine frame, on which the capsule opener unit is fixedly attached/mounted.

The coffee machine may further comprise a funnel fixedly mounted within the coffee machine, optionally, fixedly mounted on the machine frame, and having a funnel opening being arranged so as to be able to receive the content of the capsule vertically falling out therefrom when the capsule cover foil is automatically peeled off from the capsule accommodated in the capsule receiving seat and being rotated in the emptying position. However, the funnel may also be part of the unit frame of the capsule opener unit, wherein, accordingly, the unit frame may further comprise a/the funnel fixedly mounted thereto or integrally formed therewith, wherein said funnel has a/the funnel opening being arranged so as to be able to receive the content of the capsule vertically falling out therefrom when the capsule cover foil is automatically peeled off from the capsule accommodated in the capsule receiving seat and being rotated in the emptying position.

The coffee machine may further comprise a coffee preparation and distribution unit disposed vertically underneath the capsule opener unit (e.g. taken along the linear moving direction), wherein the coffee machine may further comprise an internal water source (e.g. a refillable water container) or a port, via which the coffee machine is connectable to an external water source (via one or more hoses), wherein the coffee preparation and distribution unit is connected either to the internal water source or to the external water source via said port.

The coffee machine may be provided with one or more capsules (to be used with the coffee machine), wherein the respective capsule may comprise a capsule body having opposite edge portions on the sides (e.g. side edge portions) and a front edge portion, and a capsule cover foil having a tongue, wherein the front edge portion is fork-shaped and has two fork legs being spaced apart by a recess therebetween, and wherein the capsule cover foil rests on the front edge portion such that the tongue of the capsule cover foil covers the recess between the fork legs.

The invention may allow a (coffee) capsule to be opened in an easy manner since the opening of the capsule, when inserted by the user, is achieved by simply rotating the lid from its first (e.g. initial) rotational position to its fourth (e.g. final) rotational position thereby causing (the) various operating elements of the capsule opener unit (that is, e.g., the first and the second actuating arm, the first and the second cam, the capsule receiving seat etc.) to be correspondingly actuated (as described in this application) to thereby finally cause the content of the capsule to vertically fall out therefrom for further processing (i.e. for preparing a beverage/coffee). Further, since the user only has to rotate the lid (e.g. or has to cause the lid to rotate) in order to open a/the inserted capsule without conducting any other operations (e.g. since the capsule opener unit automatically opens the capsule, i.e. automatically peels off the capsule cover foil from the capsule), the process of opening may be repeated in the same manner for each capsule thereby eliminating the error source "user" and enhancing the reliability of opening a/the capsule. Furthermore, since the capsule opening function of the capsule opener unit may be merely mechanically operated, the capsule opener unit allows to be manufactured with reduced costs (e.g. because, in said capsule opener unit, the number of electronic devices/units may be reduced or electronic devices/units may be completely omitted).

In the following the invention will be described on the basis of certain embodiments in connection with the attached drawings. In this respect, for simplifying the explanation of the invention, directions and/or orientations may be given with respect to the respective views of the respective figures. Accordingly, it should be understood that a different view might involve a change of said given directions and/or orientations (e.g. clockwise/counter-clockwise, up/down, left/right etc.). In the figures, same reference signs will be used for same parts. The invention shall, however, not be restricted to said embodiments, and the scope of the invention shall merely be defined by the subject matter of claims as attached hereto and by equivalents thereof.
Fig. 1 schematically illustrates a plan view of a capsule opener unit according to an embodiment of the present invention, wherein cross-sections A-A, B-B and C-C are marked.
Fig. 2 schematically illustrates a cross-section view (cross-section A-A) of the capsule opener unit of Fig. 1.
Fig. 3 schematically illustrates a further cross-section view (cross-section B-B) of the capsule opener unit of Fig. 1.
Fig. 4 schematically illustrates a still further cross-section view (cross-section C-C) of the capsule opener unit of Fig. 1.
Fig. 5 schematically illustrates components of the capsule opener unit of Fig. 1, wherein cross-section D-D is marked.
Fig. 6 schematically illustrates a cross-section view (cross-section D-D) of the components of Fig. 5.
Fig. 7 schematically illustrates another cross-section view of the capsule opener unit of Fig. 1.
Fig. 8 schematically illustrates another cross-section view of the capsule opener unit of Fig. 1.
Fig. 9 schematically illustrates another cross-section view of the capsule opener unit of Fig. 1.
Fig. 10 schematically illustrates another cross-section view of the capsule opener unit of Fig. 1.
Fig. 11 schematically illustrates another cross-section view of the capsule opener unit of Fig. 1.
Fig. 12A schematically illustrates a side view of a capsule which can be used in a capsule opener unit according to an embodiment of the present invention.
Figs. 12B and 12C schematically illustrate bottom views of parts of the capsule of Fig. 12A, respectively.
Fig. 13 schematically illustrates a side view of a coffee machine provided with a capsule opener unit according to an embodiment of the present invention.

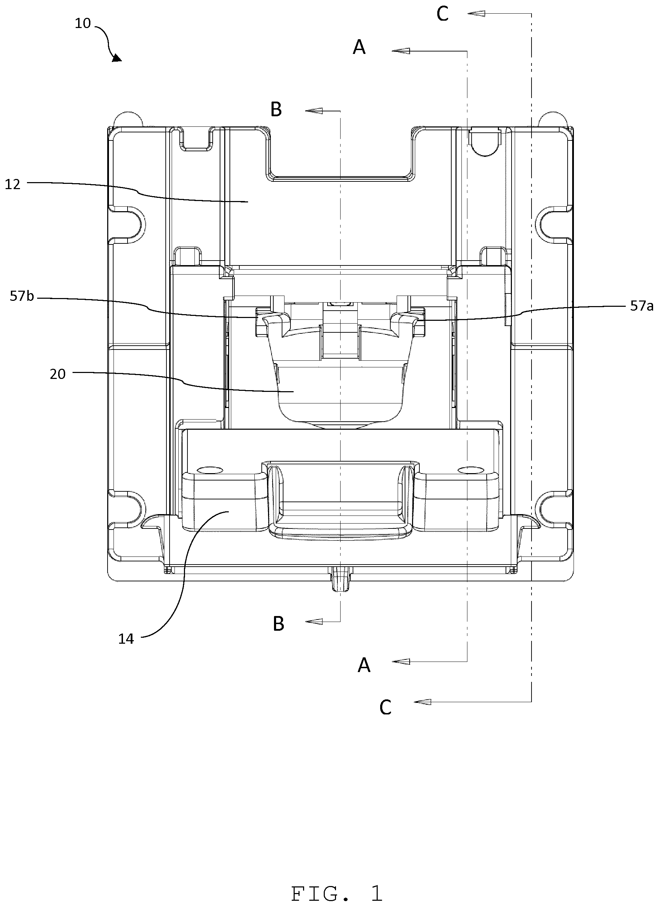

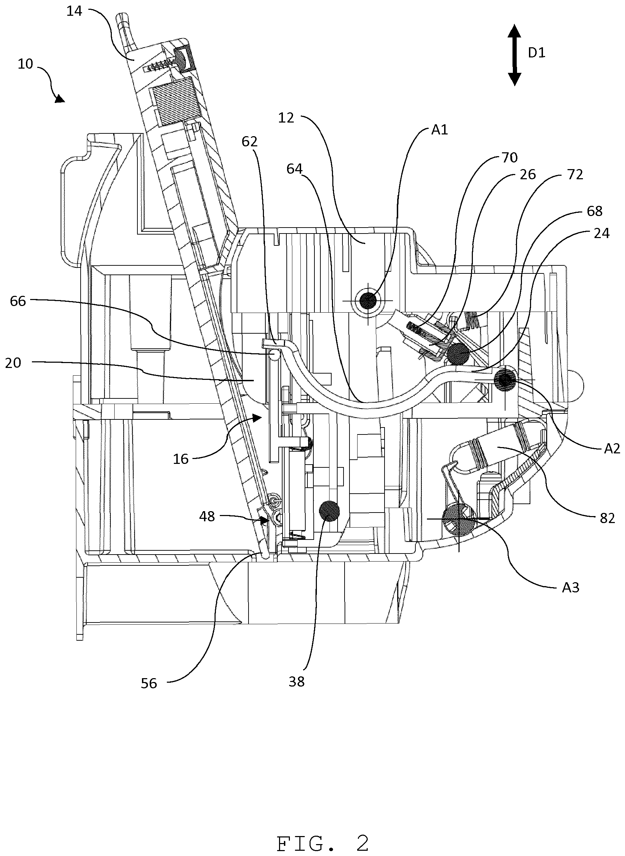

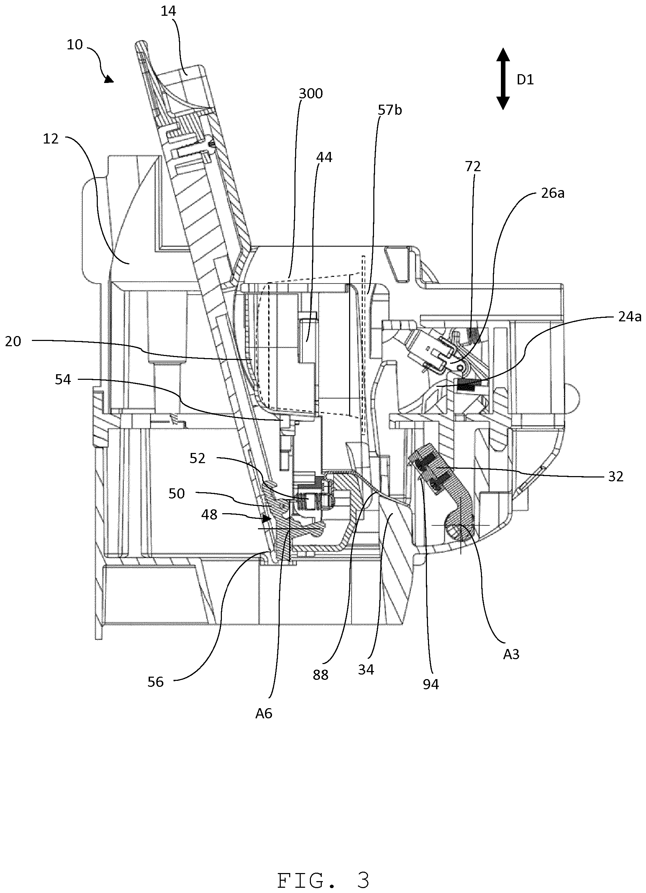

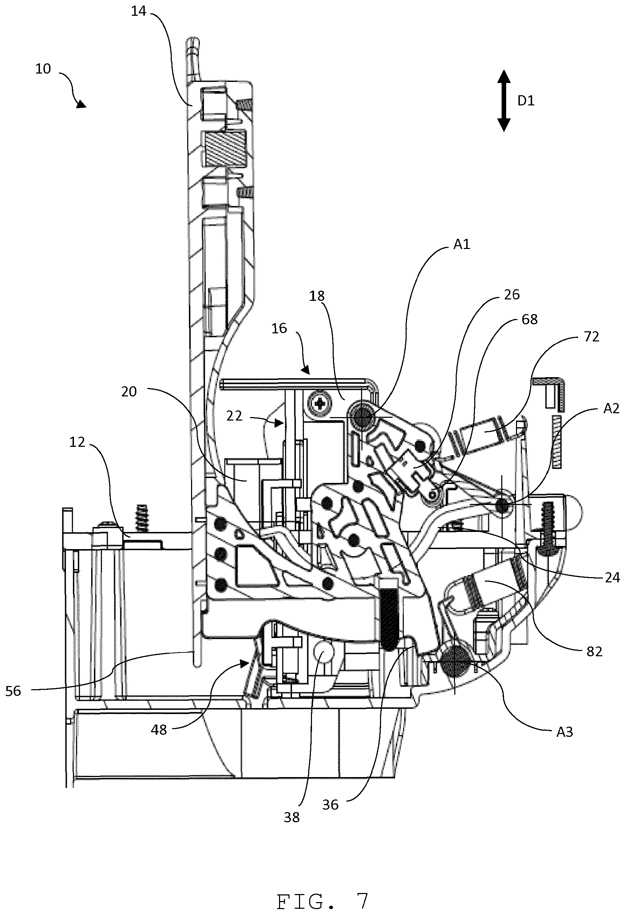

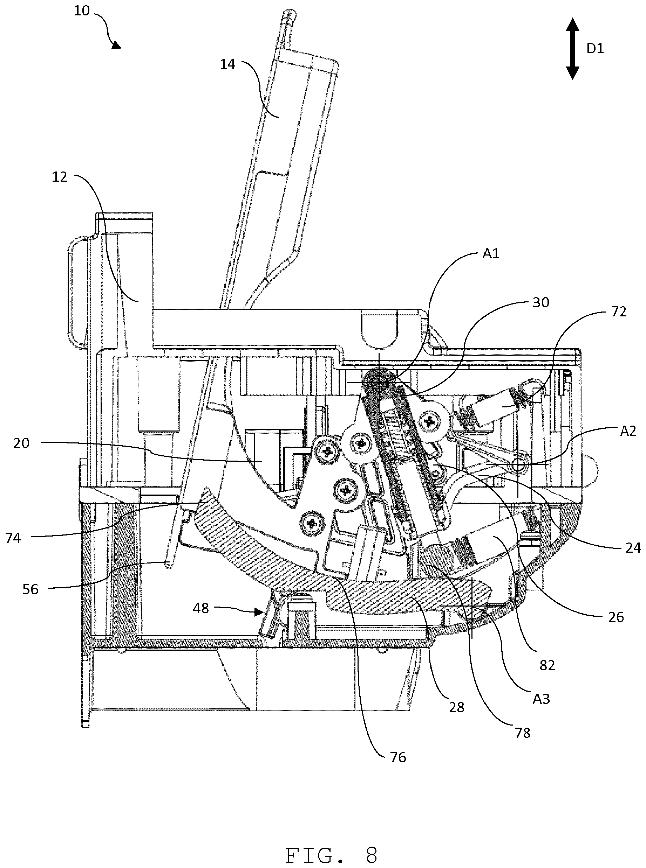

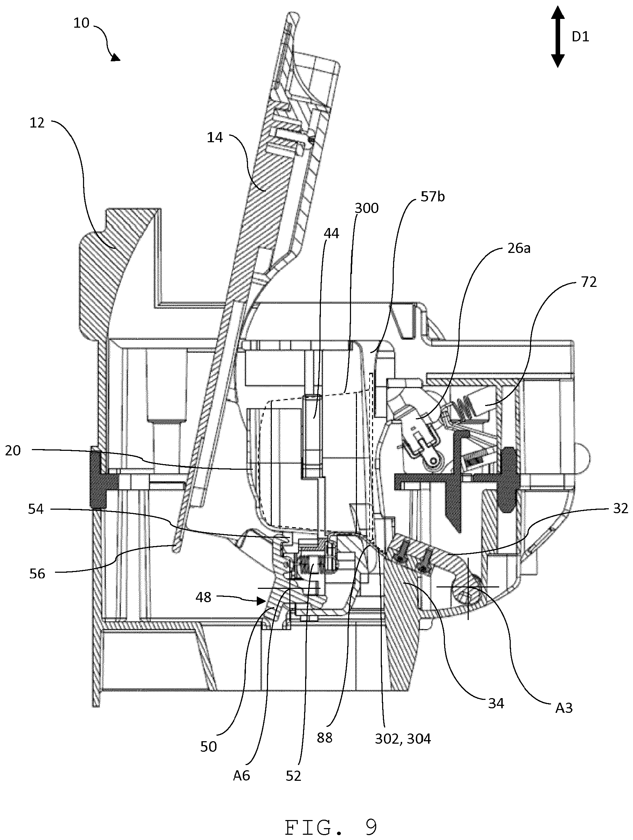

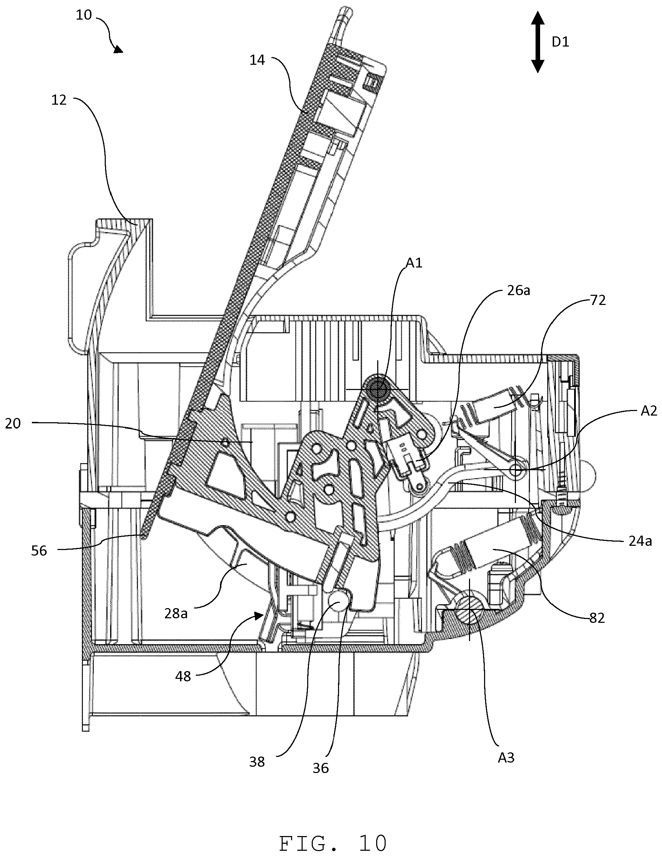

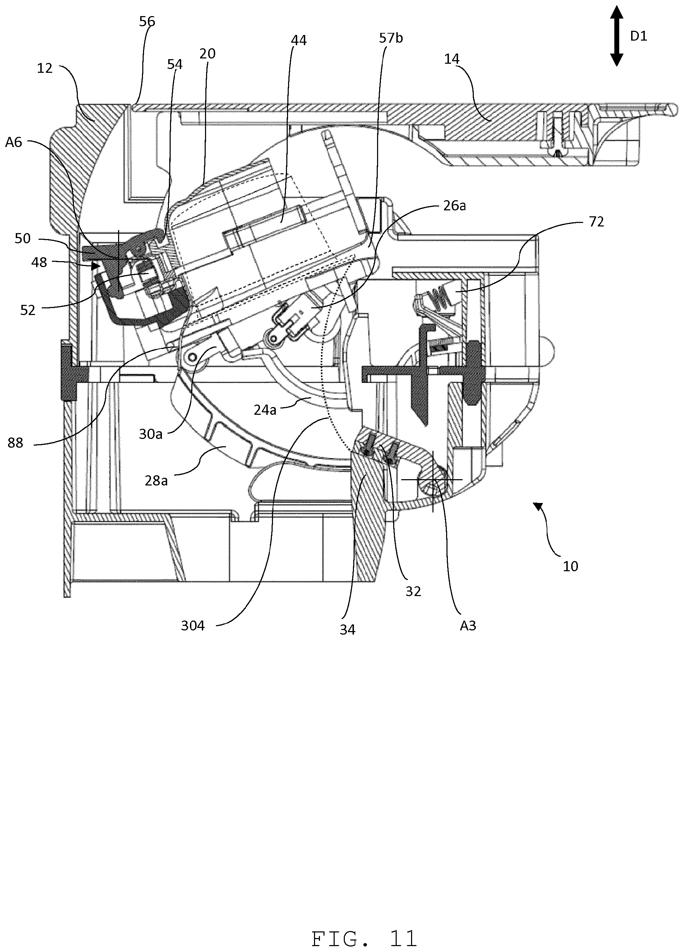

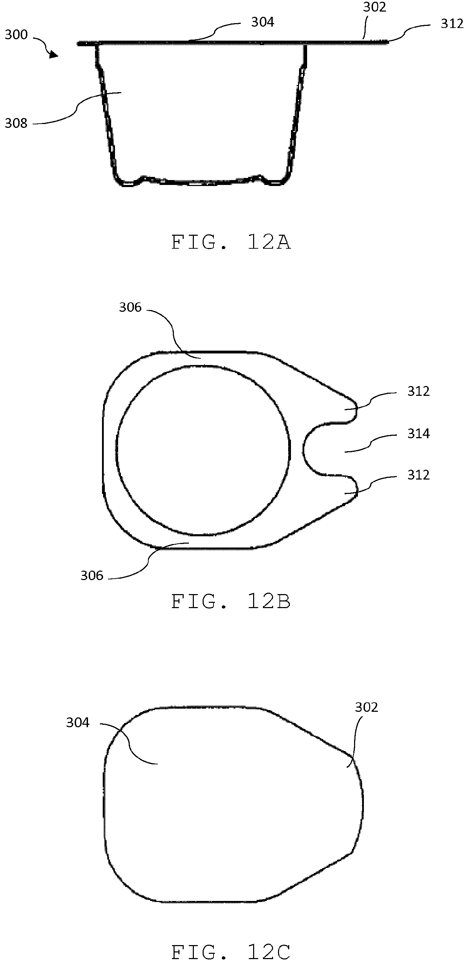

With reference to Figs. 1-11, a capsule opener unit 10 for a coffee machine 200 comprises a unit frame 12 and a lid 14 which is mounted to the unit frame 12 so as to be rotatable relative to the unit frame 12 about a first rotational axis A1. The capsule opener unit 10 further comprises a capsule accommodating unit 16 which comprises a support frame 18 which is mounted to the unit frame 12 so as to be rotatable relative to the unit frame 12 about the first rotational axis A1, and a capsule receiving seat 20 which is mounted to the support frame 18 via a linear guiding device 22 so as to be co-rotatable with the support frame 18 and to be moveable relative to the support frame 18 in a linearly guided manner along a linear moving direction D1 which is transverse (perpendicular in Figs. 1-11) to the first rotational axis A1. The capsule opener unit 10 further comprises a pair of first actuating arms 24, 24a having a first actuating arm 24 (e.g. a first first actuating arm, e.g. a first (arm) of the first actuating arms) and a further first actuating arm 24a (e.g. a second first actuating arm, e.g. a second (arm) of the first actuating arms), wherein said first actuating arms 24, 24a are integrally connected to each other (however, they may also be separate from each other), and are mounted to the unit frame 12 so as to be rotatable relative to the unit frame 12 about a second rotational axis A2 being parallel to the first rotational axis A1 and, taken along the second rotational axis A2, are positioned on opposite sides with respect to the capsule receiving seat 20, and cooperate, on the one hand, with a first cam 26 (e.g. a first first cam, e.g. a first of (e.g. a pair of) first cams) and a further first cam 26a (e.g. a second first cam, e.g. a second of (e.g. a/the pair of) first cams) of the lid 14, respectively, and, on the other hand, with the capsule receiving seat 20 such that, when the lid 14 is rotated from a first rotational position (shown in Figs. 1-4) to a second rotational position (shown in Fig. 7), the first cam 26 and the further first cam 26a respectively cause the first actuating arm 24 and the further first actuating arm 24 to rotate (e.g. together, e.g. in a synchronized manner) and to thereby cause the capsule receiving seat 20 to linearly move from a capsule insertion position (cf. Figs. 2-4), in which a capsule 300 can be inserted into the capsule receiving seat 20, to a capsule accommodation position (cf. Fig. 9), in which the capsule 300, when inserted (cf. dotted lines in Fig. 3), is finally accommodated in the capsule receiving seat 20 for being further processed (cf. dotted lines in Fig. 9). The capsule opener unit further comprises a pair of second actuating arms 28, 28a having a second actuating arm 28 (e.g. a first second actuating arm, e.g. a first (arm) of the second actuating arms) and a further second actuating arm 28a (e.g. a second second actuating arm, e.g. a second (arm) of the second actuating arms), wherein both said second actuating arms 28, 28a are mounted to the unit frame 12 so as to be rotatable relative to the unit frame 12 about a third rotational axis A3 being parallel to the first rotational axis A1. Said second actuating arms 28, 28a (both), on the one hand, have a clamping arm portion 32, to which both second actuating arms 28, 28a are fixedly attached (however, they may also be integrally formed therewith), for cooperating with a tongue 302 of a capsule cover foil 304 of the capsule 300 (cf. Figs. 12A, 12B and 12C) accommodated in the capsule receiving seat 20, wherein said second actuating arms 28, 28a, taken along the third rotational axis A3, are positioned on opposite sides with respect to the clamping arm portion 32, and, on the other hand, cooperate with a second cam 30 (e.g. a first second cam, e.g. a first of (e.g. a pair of) second cams) and a further second cam 30a (e.g. a second second cam, e.g. a second of (e.g. a/the pair of) second cams) of the lid 14, respectively, such that, when the lid 14 is further rotated from the second rotational position (shown in Fig. 7) to a third rotational position (shown in Figs. 8 and 9), the second cam 30 and the further second cam 30 respectively cause the second actuating arm 28 and the further second actuating arm 28a to rotate (e.g. together, e.g. in a synchronized manner) and to thereby cause the clamping arm portion 32 to correspondingly rotate towards a counterpart 34, fixedly mounted to the unit frame 12, to a clamping position (shown in Fig. 9), in which the clamping arm portion 32 is able to fixedly clamp said tongue 302 against said counterpart 34 (cf. dotted line in Fig. 9). The lid 14 has a pair of third cams 36 which, taken along the first rotational axis A1, are positioned on opposite sides with respect to the capsule receiving seat 20 and each of which can cooperate with a corresponding complementary part 38 of the support frame 18 (i.e. each of which can cooperate with a respective complementary part 38 of a pair of complementary parts 38 of the support frame 18), wherein, when the lid 14 is further rotated from the third rotational position (shown in Figs. 8 and 9) to a fourth rotational position (shown in Fig. 11), the second cam 30 and the further second cam 30a further cooperate with the second actuating arm 28 and the further second actuating arm 28a, respectively, such that the clamping arm portion 32 is kept in its clamping position, and both third cams 36 engage its corresponding complementary part 38 of the support frame 18 (cf. Fig. 10) such that the support frame 18 is co-rotated with the lid 14, thereby allowing to automatically peel off the capsule cover foil 304 from the capsule 300 accommodated in the capsule receiving seat 20 (cf. dotted lines in Fig. 11) and to rotate said capsule 300 into an emptying position (also shown in Fig. 11), in which a content of said capsule 300 can vertically fall out therefrom.

In the following, elements being part of a pair of said elements (e.g. the first and the second actuating arms, the first, the second and the third cams of the lid etc.) are described. In this regard, it should be understood that the respective elements (of the pair of said elements) are provided in the same manner and cooperate with respective corresponding elements in the same manner. Therefore, in order to intelligibly simplify the description, only one element of the pair of said elements will be described in detail as well as, if applicable, differences between said respective elements.

In this respect, as shown in Fig. 2, the first actuating arm 24 comprises a free end portion 62 and an engagement path 64 for being engaged by the first cam 26 so as to allow the first cam 26 to cooperate with the first actuating arm 24 via the engagement path 64 for the (e.g. counter-clockwise) rotation of the first actuating arm 24. The first cam 26 comprises an engagement protrusion 68 and a first cam spring 70 (e.g. a first cam compression spring), by which the engagement protrusion 68 is biased against the engagement path 64 of the first actuating arm 24. Further, a spring 72 (e.g. a tension spring) is connected between the first actuating arm 24 and the unit frame 12, by which the first actuating arm 24 (and the further first actuating arm 24a, which is shown, e.g., in Figs. 7 and 10) is biased towards a first actuating arm initial position, which is occupied by the first actuating arm 24 when the lid 14 is in the first rotational position as shown in Figs. 1-4, to thereby maintain engagement between the first cam 26, i.e. the engagement protrusion 68 of the first cam 26, and the engagement path 64 of the first actuating arm 24. The engagement path 64 has a concave course facing the first rotational axis A1 (e.g. with respect to the first rotational axis A1) (i.e. the course of the engagement path 64 is concave as seen from the first rotational axis A1) and extends between the second rotational axis A2 and the free end portion 62 and (extends) underneath the first rotational axis A1 taken along the linear moving direction D1. The second rotational axis A2 and the free end portion 62 of the first actuating arm 24, taken along a transverse direction which is transverse (perpendicular in Figs. 1-11) to both the first rotational axis A1 and said linear moving direction D1, are positioned on opposite sides with respect to the first rotational axis A1. The free end portion 62 of the first actuating arm 24 is engaged with a first engagement portion 66 of the capsule receiving seat 20 such that, when the first actuating arm 24 is caused by the first cam 26 to rotate (in a counter-clockwise rotational direction), the first actuating arm 24, via the engagement between its free end portion 62 and the first engagement portion 66, causes (e.g. pushes) the capsule receiving seat 20 (such as) to linearly move from the capsule insertion position to the capsule accommodation position (i.e. downwards along the linear moving direction D1). The further first actuating arm 24a, which is shown in, e.g., Figs. 7 and 10, is provided in the manner as the first actuating arm 24 (e.g. as described above), and the further first cam 26a, which is also shown in, e.g., Figs. 7 and 10, is provided in the manner as the first cam 26 (e.g. as described above), wherein the further first actuating arm 24a cooperates with the further first cam 26a of the lid 14 in the manner as the first actuating arm 24 cooperates with the first cam 26 (e.g. as described above).

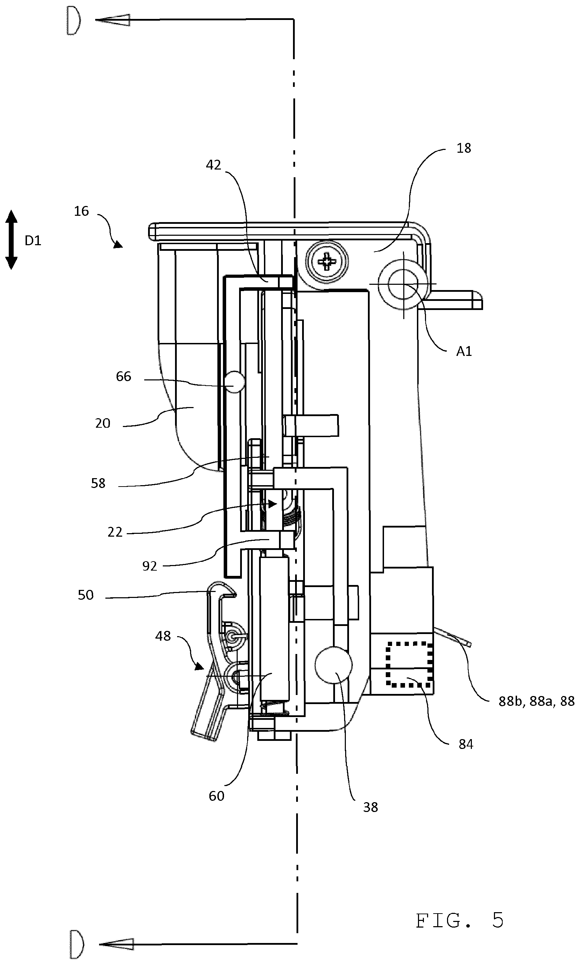

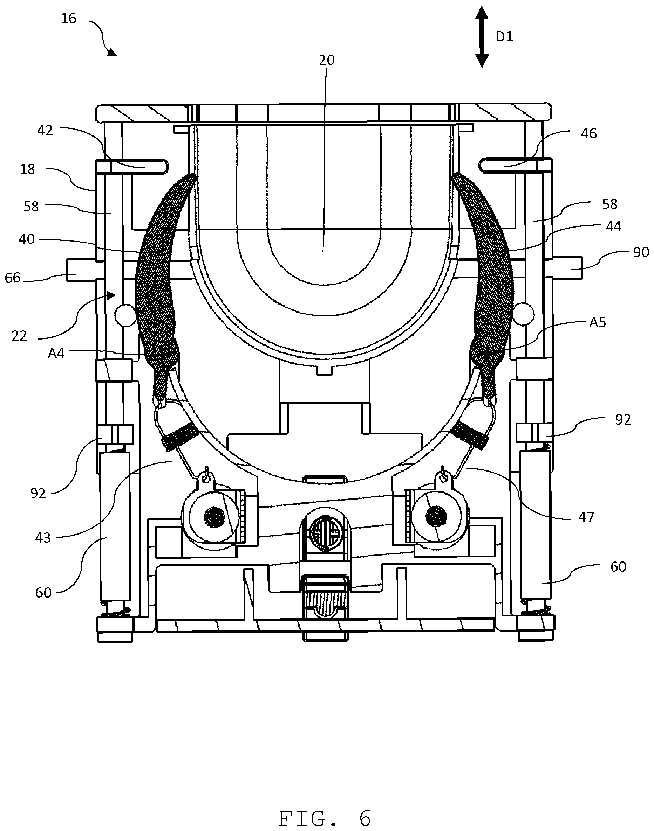

Still referring to Fig. 2 in connection with Figs. 5 and 6, the linear guiding device 22 comprises two elongated bars 58, and the capsule receiving seat 20 comprises respective mounting protrusions 92, via which the capsule receiving seat 20 is mounted to the elongated bars 58, i.e. the linear guiding device 22, so as to be linearly guided by the elongated bars 58 along the linear moving direction D1, wherein the linear guiding device 22 further comprises a pair of restoring springs 60, wherein the respective restoring spring 60 is connected between the support frame 18 and the respective mounting protrusion 92 of the capsule receiving seat 20 to bias the capsule receiving seat 20 towards the capsule insertion position (i.e. upwards along the linear moving direction D1).

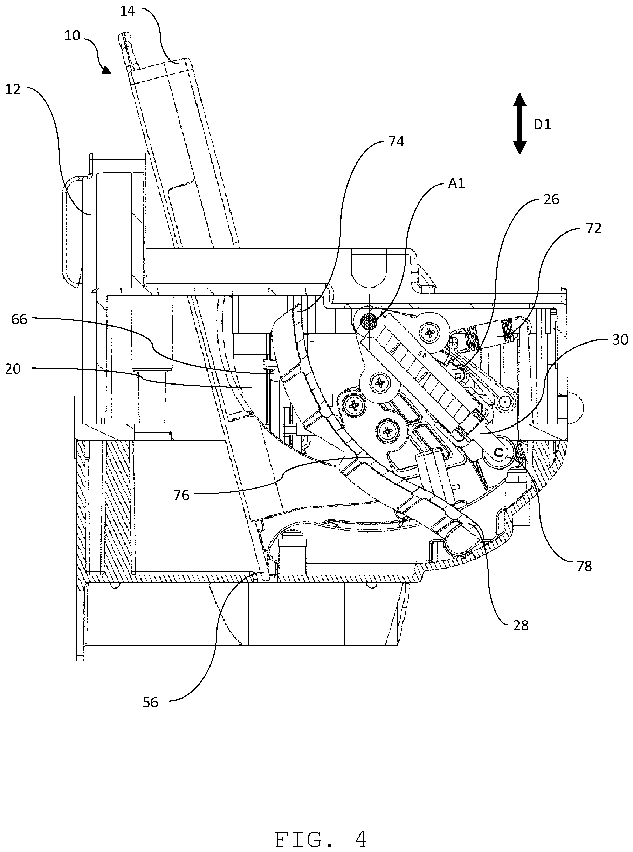

With reference to Figs. 2, 3, 4 and 8, the second actuating arm 28 comprises a free end portion 74 and an engagement path 76 for being engaged by the second cam 30 so as to allow the second cam 30 to cooperate with the second actuating arm 28 via the engagement path 76 for, firstly, the (e.g. counter-clockwise) rotation of the second actuating arm 28 and the corresponding (e.g. counter-clockwise) rotation of the clamping arm portion 32 to the clamping position and, secondly, for allowing the clamping arm portion 32 to be kept in the clamping position, which is shown, e.g., in Fig. 9. As shown in Fig. 8, the second cam 30 comprises an engagement protrusion 78 and a second cam spring 80 (e.g. a second cam compression spring), by which the engagement protrusion 78 is biased against the engagement path 76 of the second actuating arm 28. Further, a spring 82 (e.g. a tension spring) is connected between the second actuating arm 28 and the unit frame 12 (cf. Fig. 2), by which the second actuating arm 28 (and the further second actuating arm 28a, which is shown, e.g., in Fig. 11) is (are) biased towards a second actuating arm initial position as shown in Fig. 4, which is occupied by the second actuating arm 28 (and by the further second actuating arm 28a) when the lid 14 is in the first or in the second rotational position, to thereby maintain engagement between the second cam 30, i.e. the engagement protrusion 78 of the second cam 30, and the engagement path 76 of the second actuating arm 28. The engagement path 76 of the second actuating arm 28 has a concave course facing the first rotational axis A1 (e.g. with respect to the first rotational axis A1) (i.e. the course of the engagement path 76 is concave as seen from the first rotational axis A1) and extends between the third rotational axis A3 and the free end portion 74 and (extends) underneath the second rotational axis A2 taken along the linear moving direction D1. The third rotational axis A3 and the free end portion 74 of the second actuating arm 28, taken along a transverse direction which is transverse (perpendicular in Figs. 1-11) to both the first rotational axis A1 and said linear moving direction D1, are positioned on opposite sides with respect to the first rotational axis A1. The further second actuating arm 28a, which is shown, e.g., in Fig. 11, is provided in the manner as the second actuating arm 28 (e.g. as described above), and the further second cam 30a, which is also shown, e.g., in Fig. 11, is provided in the manner as the second cam 30 (e.g. as described above), wherein the further second actuating arm 28a cooperates with the further second cam 30a of the lid 14 in the manner as the second actuating arm 28 cooperates with the second cam 30 (e.g. as described above).

As shown in Fig. 3, the capsule accommodating unit 16 further comprises a tongue guiding member 88 fixedly mounted to the support frame 18 and protruding therefrom to the counterpart 34 in a concave (e.g. as seen from the first rotational axis A1) and inclined manner to thereby allow guiding the tongue 302 of the capsule cover foil 304 of the capsule 300 onto the counterpart 34 when the capsule receiving seat 20 is linearly moved from the capsule insertion position to the capsule accommodation position (cf. Figs. 3 and 9). The tongue guiding member 88 comprises a free end portion 88a oriented towards the counterpart 34 and provided in a fork shape with two fork legs 88b spaced by a recess 88c therebetween (not shown in the figures). Further, as shown in Fig. 3, the clamping arm portion 32 comprises a plurality of spikes 94 fixedly attached to the clamping arm portion 32 (via a mounting plate and screws) and being disposed such that the spikes 94 face towards the counterpart 34 (also in the clamping position) such that the spikes 94 can penetrate the tongue 302 of the capsule cover foil 304 in the clamping position to thereby allow the tongue 302 of the capsule cover foil 304 to be fixed on the counterpart 34 (in a more reliable manner).

With reference to Figs. 3, 5 and 9, the capsule opener unit 10 further comprises a lock unit 48 comprising a locking latch 50, which is mounted to the support frame 18 so as to be rotatable relative to the support frame 18 about a sixth rotational axis A6 being parallel to the first rotational axis A1 and to be biased in a locking direction (e.g. in a clockwise rotational direction) by a locking spring 52 (e.g. a locking tension spring) of the lock unit 48, wherein the locking latch 50 cooperates with a locking recess 54 of the capsule receiving seat 20 such that, when the capsule receiving seat 20 is linearly moved in the capsule accommodation position, the locking latch 50 latches into the locking recess 54 to thereby retain the capsule receiving seat 20 in the capsule accommodation position. The lid 14 comprises a fourth cam 56 which cooperates with the locking latch 50 such that, when the lid 14 is rotated from the second rotational position to the first rotational position, the fourth cam 56 causes the locking latch 50 to be released from the locking recess 54 (e.g. by a counter-clockwise rotation of the locking latch 50) thereby allowing the capsule receiving seat 20 to linearly move from the capsule accommodation position to the capsule insertion position (i.e. to be linearly moved from the capsule accommodation position to the capsule insertion position by a pushing force applied by the pair of restoring springs 60).

As shown in Figs. 1, 3 and 9, the support frame 18 has a first and a second longitudinal groove 57a, 57b formed therein for cooperating with opposite edge portions 306 on the sides (e.g. opposite side edge portions) of the capsule 300 (cf. Figs. 12A to 12C), which grooves 57a, 57b are spaced from each other in a direction parallel to the first rotational axis A1 (e.g., taken along a/the direction parallel to the first rotational axis A1, are positioned on opposite sides with respect to a/the center of the capsule receiving seat 20) and extend parallel to the linear moving direction D1 of the capsule receiving seat 20, and which, when the capsule 300 is inserted into the capsule receiving seat 20 in the capsule insertion position (cf. Fig. 3), can receive said opposite edge portions 306 on the sides of the capsule 300 and can keep them received when the capsule receiving seat 20 is linearly moved from the capsule insertion position to the capsule accommodation position (cf. Fig. 9), to thereby prevent the capsule 300 from escaping from the capsule receiving seat 20 in a direction transverse to the linear moving direction D1 (i.e., with reference to Figs. 3 and 9, to thereby prevent the capsule 300 from escaping from the capsule receiving seat 20 to the right and left, wherein the capsule 300 is additionally prevented from escaping therefrom to the left by the capsule receiving seat 20 itself).

As indicated in Fig. 5, the capsule opener unit 10 further comprises a magnetic element 84 (cf. dotted line) which is arranged on the capsule accommodating unit 16, and a corresponding counter-element 86 (not shown in the figures) which is arranged on the unit frame 12. The magnetic element 84 and the corresponding counter-element 86 cooperate such as to hold the capsule accommodating unit 16 on the unit frame 12 via magnetic force when the lid 14 is in any one of the first to third rotational positions, and such as to release the capsule accommodating unit 16 from the unit frame 12 when the lid 14 is further rotated from the third rotational position towards its fourth rotational position.

Referring to Fig. 6, the capsule accommodating unit 16 further comprises a first retaining arm 40 and a second retaining arm 44 which both are mounted to the support frame 18 so as to be rotatable relative to the support frame 18 about a fourth rotational axis A4 and a fifth rotational axis A5, respectively. Both the fourth and the fifth rotational axis A4, A5 are transverse (perpendicular in Fig. 6) to both the first rotational axis A1 and the linear moving direction D1. The first retaining arm 42 and the second retaining arm 44, taken along the first rotational axis A1, are positioned on opposite sides with respect to a/the center of the capsule receiving seat 20. The first and the second retaining arms 40, 44 cooperate with a first and a second cam 42, 46 of the capsule receiving seat 20, respectively, such that, when the capsule receiving seat 20 linearly moves from the capsule insertion position (cf. Figs. 2, 3 and 6) to the capsule accommodation position (cf. Fig. 9) (i.e. downwards along the linear moving direction D1), the first and the second cam 42, 46 of the capsule receiving seat 20 respectively cause (e.g. push) the first and the second retaining arm 40, 44 (such as) to rotate in a respective rotational direction being opposite to each other (i.e., referring to Fig. 6, the first retaining arm 40 can be caused (e.g. pushed such as) to rotate in a clockwise rotational direction by said first cam 42 of the capsule receiving seat 20 and the second retaining arm 44 can be caused (e.g. pushed such as) to rotate in a counter-clockwise rotational direction by said second cam 46 of the capsule receiving seat 20) from a respective capsule receiving position (cf. Figs. 6), in which the capsule 300 can be inserted into the capsule receiving seat 20, to a respective capsule retaining position, in which the capsule 300, when inserted, is finally accommodated in the capsule receiving seat 20 and is prevented, by the first and the second retaining arm 40, 44, from escaping from the capsule receiving seat 20 in a direction parallel to the linear moving direction D1 (e.g. in a upwards direction with respect to Figs. 6). The capsule accommodating unit 16 further comprises a first retaining arm spring 43 between the first retaining arm 40 and the support frame 18 and a second retaining arm spring 47 between the second retaining arm 44 and the support frame 18. The first retaining arm spring 43 and the second retaining arm spring 47 respectively bias the first retaining arm 40 and the second retaining arm 44 towards their respective capsule receiving position (as shown in Fig. 6).

In the following, the operation of the capsule opener unit 10 will be further described. In this regard, Figs. 1-4 schematically show the lid 14 in its first rotational position, Fig. 7 schematically shows the lid 14 in its second rotational position, Figs. 8 and 9 schematically show the lid 14 in its third rotational position, Fig. 10 schematically shows the lid 14 between its third and its forth rotational position, and Fig. 11 schematically shows the lid 14 in its fourth rotational position. The first rotational position of the lid 14 is angularly spaced from the second rotational position of the lid 14 by 15° (+/- tolerances), the second rotational position of the lid 14 is angularly spaced from the third rotational position of the lid 14 by 15° (+/tolerances), and the third rotational position of the lid 14 is angularly spaced from the fourth rotational position of the lid 14 by 75° (+/- tolerances) (i.e., accordingly, the first rotational position is angularly spaced from the fourth rotational position by 105° (+/- tolerances)).

As shown in Figs. 1-4, the lid 14 is positioned in its first rotational position and the capsule receiving seat 20 is, accordingly, positioned in its capsule insertion position (also cf. Fig.6), wherein a/the capsule 300 is inserted/has been inserted into the capsule receiving seat 20 as indicated by the dotted lines in Fig. 3. In this stage, the capsule 300 is prevented from escaping from the capsule receiving seat 20, on the one hand, in the linear moving direction towards the capsule accommodation position (i.e. downward along the linear moving direction) by the capsule receiving seat 20 and, on the other hand, in a direction transverse (e.g. perpendicular) to the linear moving direction D1 by the first and the second longitudinal grooves 57a, 57b which respectively accommodate the opposite edge portions 306 on the sides of the capsule 300. The first actuating arms 24, 24a are biased to the first actuating arm initial position by the spring 72 connected first actuating arms 24, 24a and the unit frame 12. The second actuating arms 28, 28a and, accordingly, the clamping arm portion 32 (being fixedly connected thereto) are biased to the second actuating arm initial position by the spring 82 connected to the second actuating arms 28, 28a and the unit frame 12. The first cams 26, 26a and the second cams 30, 30a of the lid 14, taken along a transverse direction which is transverse (perpendicular in Figs. 1-11) to both the first rotational axis A1 and the linear moving direction D1, are positioned on a side with respect to the first rotational axis A1 where the first actuating arms 24, 24a and the second actuating arms 28, 28a are mounted to the unit frame 12, respectively (in this regard, both the first cams 26, 26a and the second cams 30, 30a switch sides with respect to the first rotational axis A1 as the lid 14 rotates from the third to the fourth rotational position). The locking latch 50 of the lock unit 48 is caused to rotate about the sixth rotational axis A6 (in a counter-clockwise rotational direction) by the fourth cam 56 of the lid 14. The retaining arms 40, 44 are in their respective capsule receiving position (cf. Fig. 6).

As shown in Fig. 7, the lid 14 is/has been rotated to the second rotational position (e.g. in a clockwise rotational direction) and, accordingly, the capsule receiving seat 20 is/has been moved to its capsule accommodation position (also cf. Fig. 9), in which the capsule receiving seat 20 is retained by the locking latch 50 of the lock unit 48 being latched into the locking recess 54 of the capsule receiving seat 20. In this respect, when the lid 14 is rotated/rotates from the first to the second rotational position, the first cams 26, 26a of the lid 14 (being respectively engaged with the respective engagement paths 64 of the first actuating arms 24, 24a) correspondingly rotate with the lid 14 (and, during said rotation of the lid 14, the second cams 30, 30a also correspondingly rotate with the lid 14) and, due to their engagement with the respective engagement paths 64 of the first actuating arms 24, 24a, respectively apply a pushing force in a downward manner (with respect to the linear moving direction D1) on said respective engagement paths 64 of the first actuating arms 24, 24a, while moving along thereon, such that the first actuating arms 24, 24a are rotated/rotate about the second rotational axis A2 (in a counter-clockwise rotational direction). Hence, due to said rotation of the first actuating arms 24, 24a, the respective free end portions 62 of the first actuating arms 24, 24a, via the first and the second engagement portion 66, 90 of the capsule receiving seat 20, linearly move (e.g. push) the capsule receiving seat 20 (downwards along the linear moving direction D1) to its capsule accommodation position. Further, when the lid 14 is rotated/rotates from the first to the second rotational position and when the lid 14 is angularly spaced to the second rotational position by 7° ± 10% (e.g. by 6° ± 10%, e.g. by 5° ± 10%, e.g. by 4° ± 10%, e.g. by 3° ± 10%), the capsule receiving seat 20 engages (e.g. starts to engage) the locking latch 50 of the lock unit 48 (which, as the fourth cam 56 of the lid 14 rotated away from the locking latch 50, rotated back about the sixth rotational axis A6 (in a clockwise rotational direction) caused by the locking spring 52) such that the locking latch 50 is caused to rotate about the sixth rotation axis A6 (in a counter-clockwise rotational direction), and, when the capsule receiving seat 20 reaches a position, which is substantially corresponding with the capsule accommodation position and in which the locking latch 50 corresponds to the locking recess 54, the locking latch 50 is caused to rotate back about the sixth rotation axis A6 (in a clockwise rotational direction) into the locking recess 54 by the locking spring 52 (e.g. due to a biasing force of the locking spring 52 applied to the locking latch 50). Further, when the capsule receiving seat 20 linearly moves from the capsule insertion position to the capsule accommodation position, the first and the second retaining arms 40, 44 cooperate with the first and the second cam 42, 46 of the capsule receiving seat 20, respectively (i.e. the first and the second cam 42, 46 of the capsule receiving seat 20 respectively push the first and the second retaining arms 40, 44, as the capsule receiving seat 20 linearly moves downward along the linear moving direction D1), such that the first and the second retaining arm 40, 44 rotate about the fourth and the fifth rotational axis A4, A5 in a respective rotational direction being opposite to each other from their respective capsule receiving position (cf. Fig. 6) to their respective capsule retaining position, respectively. That is, the first retaining arm 40 rotates about the fourth rotational axis A4 in a counter-clockwise rotational direction and the second retaining arm 44 rotates about the fifth rotational axis A5 in a clockwise rotational direction until both retaining arms 40, 44 (e.g. substantially) abut and/or are in proximity of the capsule 300. Accordingly, the capsule is further prevented, by the first and the second retaining arm 40, 44, from escaping from the capsule receiving seat 20 in the linear moving direction D1 (in an upwards direction). Furthermore, when the capsule receiving seat 20 is linearly moved/moves from the capsule insertion position to the capsule accommodation position, the tongue 302 of the capsule cover foil 304 of the capsule 300 is/has been guided onto the counterpart 34 by the tongue guiding member 88 (indicated in Fig. 9).

As shown in Figs. 8 and 9, the lid 14 is/has been rotated to the third rotational position (e.g. in a clockwise rotational direction). In this respect, when the lid 14 is rotated/rotates from the second to the third rotational position, the second cams 30, 30a of the lid 14 correspondingly rotate further with the lid 14 and start engaging the respective engagement paths 76 of the second actuating arms 28, 28a and then moving along thereon, respectively, wherein, while moving along the respective engagement paths 76 of the second actuating arms 28, 28a, the second cams 30, 30a of the lid 14 respectively apply a pushing force in a downward manner (e.g. with respect to the linear moving direction D1) thereon such that the second actuating arms 28, 28a are rotated/rotate about the third rotational axis A3 (in a counter-clockwise rotational direction) and the clamping arm portion 32 is correspondingly rotated/ correspondingly rotates towards the counterpart 34 to the clamping position (also shown in Fig. 9). As a result, as shown in Fig. 9, the tongue 302 of the capsule cover foil 304 is fixedly clamped against the counterpart 34.

As shown in Figs. 10 and 11, the lid 14 rotates / has been rotated to the fourth rotational position (e.g. in a clockwise rotational direction). In this respect, when the lid 14 is further rotated/rotates further from the third rotational position to the fourth rotational position, the second cams 30, 30a further cooperate with the second actuating arms 28, 28a, respectively, such that the clamping arm portion 32 is kept in its clamping position, and, as shown in Fig. 10, the pair of third cams 36 of the lid 14 respectively cooperate with the/their corresponding complementary part 38 of the support frame 18 (i.e. each of the pair of third cams 36 can cooperate with a complementary part 38 of a pair of complementary parts 38 of the support frame 18, respectively), such that the support frame 18 is co-rotated with the lid 14. As a result, as shown in Fig. 11, the capsule cover foil 304 is/has been automatically peeled off from the capsule 300 and the capsule is/has been rotated into the emptying position, in which the content of said capsule 300 can vertically fall out therefrom (e.g. has vertically fallen out therefrom). In the fourth rotational position of the lid 14, the first cams 26, 26a and the second cams 30, 30a of the lid 14, taken along a transverse direction which is transverse (perpendicular in Figs. 1-11) to both the first rotational axis A1 and the linear moving direction D1, are positioned on a side with respect to the first rotational axis A1, which is opposite to where the first actuating arms 24, 24a and the second actuating arms 28, 28a are mounted to the unit frame 12, respectively.

Referring to Figs. 12A, 12B and 12C, a/the capsule 300 which may be used with the capsule opener unit described in this application comprises a capsule body 308 having opposite edge portions 306 on the sides and a front edge portion 310 (cf. Fig. 12B), and a capsule cover foil 304 having a tongue 302 (cf. Fig. 12C). As shown in Fig. 12B, the front edge portion 310 is fork-shaped and has two fork legs 312 which are spaced apart by a recess 314 therebetween. The capsule cover foil 304 rests on the front edge portion 310 such that (e.g. a part of) the tongue 302 of the capsule cover foil 304 covers the recess 314 between the fork legs 312 (cf. Fig. 12A). In this regard, when the capsule of Fig. 12A is used, in the stage, when the clamping arm portion 32 is in its clamping position, the clamping arm portion 32 is positioned between the two fork legs 312 (i.e. in the recess 314) and (e.g. the part of) the tongue 302 of the capsule cover foil 304 covering the recess 314 between the fork legs 312 is sandwiched between the clamping arm portion 32 and the counterpart 34 such as to fixedly clamp the tongue 302 against the counterpart 34.

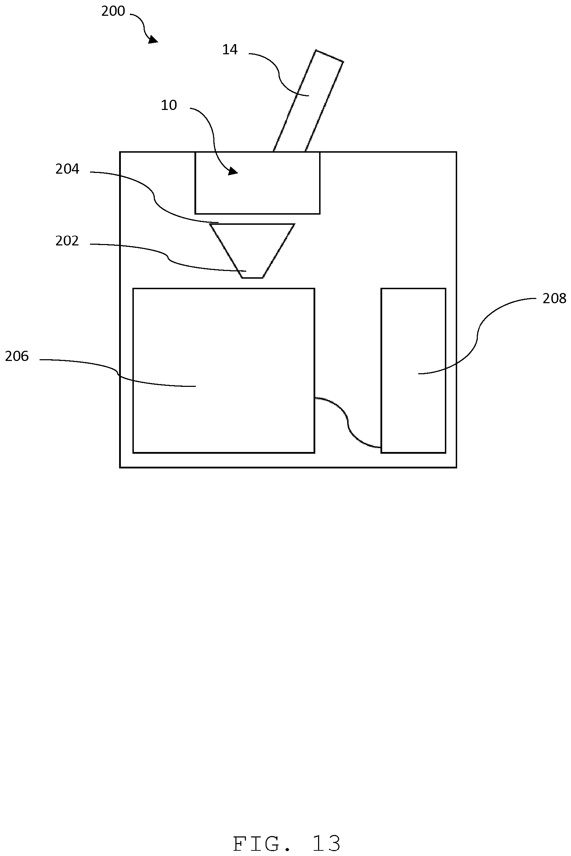

Referring to Fig. 13, a coffee machine 200 comprises a capsule opener unit 10 as described in this application and a funnel 202 fixedly mounted within the coffee machine 200 and having a funnel opening 204 being arranged so as to be able to receive a content of a capsule 300 vertically falling out therefrom when the capsule cover foil 304 is automatically peeled off from the capsule 300 accommodated in the capsule receiving seat 20 of the capsule opener unit 10 and being rotated in the emptying position. The coffee machine 200 further comprises a coffee preparation and distribution unit 206 disposed vertically underneath the capsule opener unit 10 and the funnel 202 (taken along the linear moving direction D1), and an internal water source 208 (e.g. a refillable water container) connected to the coffee preparation and distribution unit 206.

### List of Reference Signs

- 10:: capsule opener unit
- 12:: unit frame
- 14:: lid
- 16:: capsule accommodating unit
- 18:: support frame
- 20:: capsule receiving seat
- 22:: linear guiding device
- 24:: first actuating arm
- 24a:: further first actuating arm
- 26:: first cam of the lid
- 26a:: further first cam of the lid
- 28:: second actuating arm
- 28a:: further second actuating arm
- 30:: second cam of the lid
- 30a:: further second cam of the lid
- 32:: clamping arm portion
- 34:: counterpart
- 36:: third cam of the lid
- 38:: complementary part
- 40:: first retaining arm
- 42:: first cam of the capsule receiving seat
- 43:: first retaining arm spring
- 44:: second retaining arm
- 46:: second cam of the capsule receiving seat
- 47:: second retaining arm spring
- 48:: lock unit
- 50:: locking latch
- 52:: locking spring
- 54:: locking recess
- 56:: fourth cam of the lid
- 57a:: first longitudinal groove
- 57b:: second longitudinal groove
- 58:: elongated bar of the linear guiding device
- 60:: restoring spring
- 62:: free end portion of the first actuating arm
- 64:: engagement path of the first actuating arm
- 66:: first engagement portion of the capsule receiving seat
- 68:: engagement protrusion of the first cam
- 70:: first cam spring of the first cam
- 72:: spring between first actuating arm and unit frame
- 74:: free end portion of the second actuating arm
- 76:: engagement path of the second actuating arm
- 78:: engagement protrusion of the second cam
- 80:: second cam spring of the second cam
- 82:: spring between second actuating arm and unit frame
- 84:: magnetic element
- 86:: corresponding counter-element
- 88:: tongue guiding member
- 88a:: free end portion of the tongue guiding member
- 88b:: fork leg of the tongue guiding member
- 88c:: recess of the tongue guiding member
- 90:: second engagement portion of the capsule receiving seat
- 92:: mounting protrusion of the capsule receiving seat
- 94:: spike
- 200:: coffee machine
- 202:: funnel
- 204:: funnel opening
- 206:: coffee preparation and distribution unit
- 208:: internal water source
- 300:: capsule
- 302:: tongue
- 304:: capsule cover foil
- 306:: side edge portion of the capsule
- 308:: capsule body
- 310:: front edge portion of the capsule
- 312:: fork leg of the capsule
- 314:: recess of the capsule
- A1:: first rotational axis
- A2:: second rotational axis
- A3:: third rotational axis
- A4:: fourth rotational axis
- A5:: fifth rotational axis
- A6:: sixth rotational axis
- D1:: linear moving direction

## Claims

1. Capsule opener unit (10) for a coffee machine (200), comprising
a unit frame (12),
a lid (14) which is mounted to the unit frame (12) so as to be rotatable relative to the unit frame (12) about a first rotational axis (A1),
a capsule accommodating unit (16) which comprises a support frame (18) which is mounted to the unit frame (12) so as to be rotatable relative to the unit frame (12) about the first rotational axis (A1), and a capsule receiving seat (20) which is mounted to the support frame (18) via a linear guiding device (22) so as to be co-rotatable with the support frame (18) and to be moveable relative to the support frame (18) in a linearly guided manner along a linear moving direction (D1) which is transverse to the first rotational axis (A1),
a first actuating arm (24) which is mounted to the unit frame (12) so as to be rotatable relative to the unit frame (12) about a second rotational axis (A2) being parallel to the first rotational axis (A1) and which cooperates, on the one hand, with a first cam (26) of the lid (14) and, on the other hand, with the capsule receiving seat (20) such that, when the lid (14) is rotated from a first rotational position to a second rotational position, the first cam (26) causes the first actuating arm (24) to rotate and to thereby cause the capsule receiving seat (20) to linearly move from a capsule insertion position, in which a capsule (300) can be inserted into the capsule receiving seat (20), to a capsule accommodation position, in which the capsule (300), when inserted, is finally accommodated in the capsule receiving seat (20) for being further processed,
a second actuating arm (28) which is mounted to the unit frame (12) so as to be rotatable relative to the unit frame (12) about a third rotational axis (A3) being parallel to the first rotational axis (A1) and which, on the one hand, cooperates with a second cam (30) of the lid (14) and, on the other hand, has a clamping arm portion (32) for cooperating with a tongue (302) of a capsule cover foil (304) of the capsule (300) accommodated in the capsule receiving seat (20) such that, when the lid (14) is further rotated from the second rotational position to a third rotational position, the second cam (30) causes the second actuating arm (28) to rotate and to thereby cause the clamping arm portion (32) to correspondingly rotate towards a counterpart (34), fixedly mounted to the unit frame (12), to a clamping position, in which the clamping arm portion (32) is able to fixedly clamp said tongue (302) against said counterpart (34),
wherein the lid (14) has a third cam (36) which can cooperate with a complementary part (38) of the support frame (18), wherein, when the lid (14) is further rotated from the third rotational position to a fourth rotational position, the second cam (30) further cooperates with the second actuating arm (28) such that the clamping arm portion (32) is kept in its clamping position, and the third cam (36) engages the complementary part (38) of the support frame (18) such that the support frame (18) is co-rotated with the lid (14), thereby allowing to automatically peel off the capsule cover foil (304) from the capsule (300) accommodated in the capsule receiving seat (20) and to rotate said capsule (300) into an emptying position, in which a content of said capsule (300) can vertically fall out therefrom.

2. Capsule opener unit (10) according to claim 1, wherein the support frame (18) has a first and a second longitudinal groove (57a, 57b) formed therein for cooperating with opposite edge portions (306) of the capsule (300), which grooves (57a, 57b) are spaced from each other in a direction parallel to the first rotational axis (A1) and extend parallel to the linear moving direction (D1) of the capsule receiving seat (20), and which, when the capsule (300) is inserted into the capsule receiving seat (20) in the capsule insertion position, can receive said opposite edge portions (306) of the capsule (300) and can keep them received when the capsule receiving seat (20) is linearly moved from the capsule insertion position to the capsule accommodation position, to thereby prevent the capsule (300) from escaping from the capsule receiving seat (20) in a direction transverse to the linear moving direction (D1).

3. Capsule opener unit (10) according to claim 1 or 2, wherein the capsule accommodating unit (16) further comprises a first retaining arm (40) which is mounted to the support frame (18) so as to be rotatable relative to the support frame (18) about a fourth rotational axis (A4), which, optionally, is transverse to both the first rotational axis (A1) and said linear moving direction (D1), and which cooperates with a first cam (42) of the capsule receiving seat (20) such that, when the capsule receiving seat (20) linearly moves from the capsule insertion position to the capsule accommodation position, the first cam (42) of the capsule receiving seat (20) causes the first retaining arm (40) to rotate from a capsule receiving position, in which the capsule (300) can be inserted into the capsule receiving seat (20), to a capsule retaining position, in which the capsule (300), when inserted, is finally accommodated in the capsule receiving seat (20) and is prevented, by the first retaining arm (40), from escaping from the capsule receiving seat (20) in a direction parallel to the linear moving direction (D1).

4. Capsule opener unit (10) according to any one of the preceding claims, further comprising a lock unit (48) comprising a locking latch (50), which is mounted to the support frame (18) so as to be moveable relative to the support frame (18), optionally rotatable relative to the support frame (18) about a sixth rotational axis (A6) being parallel to the first rotational axis (A1), and to be biased in a locking direction by a locking spring (52) of the lock unit (48), wherein the locking latch (50) cooperates with a locking recess (54) of the capsule receiving seat (20) such that, when the capsule receiving seat (20) is linearly moved in the capsule accommodation position, the locking latch (50) latches into the locking recess (54) to thereby retain the capsule receiving seat (20) in the capsule accommodation position,
wherein, optionally, the lid (14) comprises a fourth cam (56) which cooperates with the locking latch (50) such that, when the lid (14) is rotated from the second rotational position to the first rotational position, the fourth cam (56) causes the locking latch (50) to be released from the locking recess (54) thereby allowing the capsule receiving seat (20) to linearly move from the capsule accommodation position to the capsule insertion position.

5. Capsule opener unit (10) according to any one of the preceding claims, wherein the linear guiding device (22) comprises at least one elongated bar (58), onto which the capsule receiving seat (20) is mounted in a manner so as to be linearly guided by the elongated bar (58) along the linear moving direction (D1), wherein, optionally, a restoring spring (60) is connected between the support frame (18) and the capsule receiving seat (20) to bias the capsule receiving seat (20) towards the capsule insertion position.

6. Capsule opener unit (10) according to any one of the preceding claims, wherein the first actuating arm (24) comprises a free end portion (62) and an engagement path (64) for being engaged by the first cam (26) so as to allow the first cam (26) to cooperate with the first actuating arm (24) via the engagement path (64) for the rotation of the first actuating arm (24), wherein the engagement path (64) extends between the second rotational axis (A2) and the free end portion (62) and extends underneath the first rotational axis (A1) taken along the linear moving direction (D1), wherein, taken along a transverse direction which is transverse to both the first rotational axis (A1) and said linear moving direction (D1), the second rotational axis (A2) and the free end portion (62) of the first actuating arm (24) are positioned on opposite sides with respect to the first rotational axis (A1), and wherein the free end portion (62) of the first actuating arm (24) is configured to be engaged with a first engagement portion (66) of the capsule receiving seat (20) such that, when the first actuating arm (24) is caused by the first cam (26) to rotate, the first actuating arm (24), via the engagement between its free end portion (62) and the first engagement portion (66), causes the capsule receiving seat (20) to linearly move from the capsule insertion position to the capsule accommodation position.

7. Capsule opener unit (10) according to claim 6,
wherein the engagement path (64) of the first actuating arm (24) has a concave course facing the first rotational axis (A1), and/or
wherein the first cam (26) comprises an engagement protrusion (68) and a first cam spring (70), by which the engagement protrusion (68) of the first cam (26) is biased against the engagement path (64) of the first actuating arm (24), and/or
wherein a spring (72) is connected between the first actuating arm (24) and the unit frame (12), by which the first actuating arm (24) is biased towards a first actuating arm initial position, which is occupied by the first actuating arm (24) when the lid (14) is in the first rotational position, to thereby maintain engagement between the first cam (26) and the engagement path (64) of the first actuating arm (24), optionally, between the engagement protrusion (68) and the engagement path (64) of the first actuating arm (24).

8. Capsule opener unit (10) according to any one of the preceding claims, wherein the second actuating arm (28) comprises a free end portion (74) and an engagement path (76) for being engaged by the second cam (30) so as to allow the second cam (30) to cooperate with the second actuating arm (28) via the engagement path (76) for, firstly, the rotation of the second actuating arm (28) and the corresponding rotation of the clamping arm portion (32) to the clamping position and, secondly, for allowing the clamping arm portion (32) to be kept in the clamping position, wherein the engagement path (76) extends between the third rotational axis (A3) and the free end portion (74) and extends underneath the second rotational axis (A2) taken along the linear moving direction (D1), wherein, taken along a transverse direction which is transverse to both the first rotational axis (A1) and said linear moving direction (D1), the third rotational axis (A3) and the free end portion (74) are positioned on opposite sides with respect to the first rotational axis (A1).

9. Capsule opener unit (10) according to claim 8,
wherein the engagement path (76) of the second actuating arm (28) has a concave course facing the first rotational axis (A1), and/or
wherein the second cam (30) comprises an engagement protrusion (78) and a second cam spring (80), by which the engagement protrusion (78) of the second cam (30) is biased against the engagement path (76) of the second actuating arm (28), and/or
wherein a spring (82) is connected between the second actuating arm (28) and the unit frame (12), by which the second actuating arm (28) is biased towards a second actuating arm initial position, which is occupied by the second actuating arm (28) when the lid (14) is in the first or in the second rotational position, to thereby maintain engagement between the second cam (30) and the engagement path (76) of the second actuating arm (28), optionally, between the engagement protrusion (78) of the second cam (30) and the engagement path (76) of the second actuating arm (28).

10. Capsule opener unit (10) according to any one of the preceding claims,
wherein the capsule opener unit (10) further comprises a magnetic element (84) which is arranged on the unit frame (12) or on the capsule accommodating unit (16), and a corresponding counter-element (86) which is arranged on the capsule accommodating unit (16) or on the unit frame (12), respectively, wherein the magnetic element (84) and the corresponding counter-element (86) cooperate such as to hold the capsule accommodating unit (16) on the unit frame (12) via magnetic force when the lid (14) is in any one of the first to third rotational positions, and such as to release the capsule accommodating unit (16) from the unit frame (12) when the lid (14) is further rotated from the third rotational position towards its fourth rotational position.

11. Capsule opener unit (10) according to any one of the preceding claims, wherein the capsule accommodating unit (16) further comprises a tongue guiding member (88) fixedly mounted to the support frame (18) and protruding therefrom to the counterpart (34) in a concave and/or inclined manner to thereby allow guiding the tongue (302) of the capsule cover foil (304) of the capsule (300) onto the counterpart (34) when the capsule receiving seat (20) is linearly moved from the capsule insertion position to the capsule accommodation position, and wherein the tongue guiding member (88) comprises a free end portion (88a) oriented towards the counterpart (34) and provided in a fork shape with two fork legs (88b) spaced by a recess (88c) therebetween.

12. Capsule opener unit (10) according to any one of the preceding claims,
wherein the capsule opener unit (10) comprises a pair of first actuating arms (24, 24a), one of which being the first actuating arm (24) as described in any one of the preceding claims and the other one being provided in the manner as said one first actuating arm (24), wherein said first actuating arms (24, 24a) are separate from each other or are integrally connected to each other, and, taken along the second rotational axis (A2), are positioned on opposite sides with respect to the capsule receiving seat (20), wherein said other one first actuating arm (24a) cooperates with a further first cam (26a) of the lid (14) in the manner as the first actuating arm (24) cooperates with the first cam (26), wherein, provided that in combination with claim 6, the capsule receiving seat (20) further comprises a second engagement portion (90) provided in the manner as the first engagement portion (66) such as to cooperate with said other one first actuating arm (24a), and/or
wherein the capsule opener unit (10) comprises a pair of second actuating arms (28, 28a), one of which being the second actuating arm (28) as described in any one of the preceding claims and the other one being provided in the manner as said one second actuating arm (28), wherein both said second actuating arms (28, 28a) are fixedly attached to or integrally formed with the clamping arm portion (32), and, taken along the third rotational axis (A3), are positioned on opposite sides with respect to the clamping arm portion (32), wherein said other one second actuating arm (28a) cooperates with a further second cam (30a) of the lid (14) in the manner as the second actuating arm (28) cooperates with the second cam (30).

13. Coffee machine (200) comprising the capsule opener unit (10) according to any one of the preceding claims.

14. Coffee machine (200) according to claim 13, further comprising a funnel (202) fixedly mounted within the coffee machine (200) and having a funnel opening (204) being arranged so as to be able to receive the content of the capsule (300) vertically falling out therefrom when the capsule cover foil (304) is automatically peeled off from the capsule (300) accommodated in the capsule receiving seat (20) and being rotated in the emptying position.

15. Coffee machine (200) according to claim 13 or 14 and one or more capsules (300), the respective capsule (300) comprising
a capsule body (308) having opposite edge portions (306) on the sides and a front edge portion (310), and
a capsule cover foil (304) having a tongue (302),
wherein the front edge portion (310) is fork-shaped and has two fork legs (312) being spaced apart by a recess (314) therebetween, and
wherein the capsule cover foil (304) rests on the front edge portion (310) such that the tongue (302) of the capsule cover foil (304) covers the recess (314) between the fork legs (312) .

## Patentansprüche

1. Kapselöffnereinheit (10) für eine Kaffeemaschine (200), aufweisend:
einen Einheit-Rahmen (12),
einen Deckel (14), der an dem Einheit-Rahmen (12) montiert ist, um relativ zu dem Einheit-Rahmen (12) um eine erste Drehachse (A1) drehbar zu sein,
eine Kapselaufnahmeeinheit (16), die aufweist einen Halterahmen (18), der an dem Einheit-Rahmen (12) montiert ist, um relativ zu dem Einheit-Rahmen (12) um die erste Drehachse (A1) drehbar zu sein, und einen Kapselaufnahmesitz (20), der über eine Linearführungsvorrichtung (22) an dem Halterahmen (18) montiert ist, um mit dem Halterahmen (18) mitdrehbar zu sein und relativ zu dem Halterahmen (18) in einer linear geführten Weise entlang einer linearen Bewegungsrichtung (D1), die quer zu der ersten Drehachse (A1) ist, bewegbar zu sein,
einen ersten Betätigungsarm (24), der an dem Einheit-Rahmen (12) montiert ist, um relativ zu dem Einheit-Rahmen (12) um eine zweite Drehachse (A2), die parallel zu der ersten Drehachse (A1) ist, drehbar zu sein, und der einerseits mit einem ersten Mitnehmer (26) des Deckels (14) und andererseits mit dem Kapselaufnahmesitz (20) zusammenwirkt, so dass, wenn der Deckel (14) von einer ersten Drehposition aus in eine zweite Drehposition gedreht wird, der erste Mitnehmer (26) den ersten Betätigungsarm (24) veranlasst sich zu drehen und dadurch den Kapselaufnahmesitz (20) zu veranlassen sich von einer Kapseleinsetzposition aus, in der eine Kapsel (300) in den Kapselaufnahmesitz (20) eingesetzt werden kann, in eine Kapselaufnahmeposition linear zu bewegen, in der die Kapsel (300), wenn sie eingesetzt ist, schließlich in dem Kapselaufnahmesitz (20) aufgenommen ist, um weiter verarbeitet zu werden,
einen zweiten Betätigungsarm (28), der am Einheit-Rahmen (12) montiert ist, um relativ zum Einheit-Rahmen (12) um eine dritte, zur ersten Drehachse (A1) parallele Drehachse (A3) drehbar zu sein, und der einerseits mit einem zweiten Mitnehmer (30) des Deckels (14) zusammenwirkt und andererseits einen Klemmarmabschnitt (32) zum Zusammenwirken mit einer Zunge (302) einer Kapselabdeckfolie (304) der im Kapselaufnahmesitz (20) aufgenommenen Kapsel (300) aufweist, so dass, wenn der Deckel (14) von der zweiten Drehposition aus weiter in eine dritte Drehposition gedreht wird, der zweite Mitnehmer (30) den zweiten Betätigungsarm (28) veranlasst sich zu drehen und dadurch den Klemmarmabschnitt (32) zu veranlassen sich korrespondierend in Richtung zu einem Gegenstück (34), das fest an dem Einheit-Rahmen (12) montiert ist, in eine Klemmposition zu drehen, in der der Klemmarmabschnitt (32) in der Lage ist, die Zunge (302) fest gegen das Gegenstück (34) zu klemmen,
wobei der Deckel (14) einen dritten Mitnehmer (36) aufweist, der mit einem komplementären Teil (38) des Halterahmens (18) zusammenwirken kann, wobei, wenn der Deckel (14) weiter von der dritten Drehposition in eine vierte Drehposition gedreht wird, der zweite Mitnehmer (30) ferner mit dem zweiten Betätigungsarm (28) zusammenwirkt, so dass der Klemmarmabschnitt (32) in seiner Klemmposition gehalten wird, und der dritte Mitnehmer (36) mit dem komplementären Teil (38) des Halterahmens (18) in Eingriff ist, so dass der Halterahmen (18) mit dem Deckel (14) mitgedreht wird, wodurch ermöglicht wird, die Kapselabdeckfolie (304) automatisch von der in dem Kapselaufnahmesitz (20) aufgenommenen Kapsel (300) abzuziehen und die Kapsel (300) in eine Entleerungsposition zu drehen, in der ein Inhalt der Kapsel (300) vertikal daraus herausfallen kann.

2. Kapselöffnereinheit (10) gemäß Anspruch 1, wobei der Halterahmen (18) eine erste und eine zweite darin ausgebildete Längsnut (57a, 57b) zum Zusammenwirken mit gegenüberliegenden Randabschnitten (306) der Kapsel (300) aufweist, wobei die Nuten (57a, 57b) in einer Richtung parallel zur ersten Drehachse (A1) im Abstand voneinander angeordnet sind und sich parallel zu der linearen Bewegungsrichtung (D1) des Kapselaufnahmesitzes (20) erstrecken, und, wenn die Kapsel (300) in den Kapselaufnahmesitz (20) in der Kapseleinsetzposition eingesetzt wird, die gegenüberliegenden Randabschnitte (306) der Kapsel (300) aufnehmen können und sie aufgenommen halten können, wenn der Kapselaufnahmesitz (20) von der Kapseleinsetzposition aus in die Kapselaufnahmeposition linearbewegt wird, um dadurch zu verhindern, dass die Kapsel (300) aus dem Kapselaufnahmesitz (20) in einer Richtung quer zu der linearen Bewegungsrichtung (D1) austritt.

3. Kapselöffnereinheit (10) gemäß Anspruch 1 oder 2, wobei die Kapselaufnahmeeinheit (16) ferner einen ersten Haltearm (40) aufweist, der an dem Halterahmen (18) montiert ist, um relativ zu dem Halterahmen (18) um eine vierte Drehachse (A4) drehbar zu sein, die optional quer sowohl zu der ersten Drehachse (A1) als auch zu der linearen Bewegungsrichtung (D1) ist, und der mit einem ersten Mitnehmer (42) des Kapselaufnahmesitzes (20) zusammenwirkt, so dass, wenn sich der Kapselaufnahmesitz (20) von der Kapseleinsetzposition aus zu der Kapselaufnahmeposition linearbewegt, der erste Mitnehmer (42) des Kapselaufnahmesitzes (20) den ersten Haltearm (40) veranlasst sich von einer Kapselempfangsposition aus, in der die Kapsel (300) in den Kapselaufnahmesitz (20) eingesetzt werden kann, in eine Kapselrückhalteposition zu drehen, in der die Kapsel (300), wenn sie eingesetzt ist, schließlich in dem Kapselaufnahmesitz (20) aufgenommen ist und durch den ersten Haltearm (40) daran gehindert ist, aus dem Kapselaufnahmesitz (20) in einer Richtung parallel zu der linearen Bewegungsrichtung (D1) auszutreten.

4. Kapselöffnereinheit (10) gemäß irgendeinem der vorhergehenden Ansprüche, ferner aufweisend eine Verriegelungseinheit (48), die aufweist eine Sperrklinke (50), die an dem Halterahmen (18) montiert ist, um relativ zu dem Halterahmen (18) bewegbar zu sein, optional relativ zu dem Halterahmen (18) um eine sechste Drehachse (A6), die parallel zu der ersten Drehachse (A1) ist, drehbar zu sein, und um durch eine Verriegelungsfeder (52) der Verriegelungseinheit (48) in eine Verriegelungsrichtung vorgespannt zu sein, wobei die Sperrklinke (50) mit einer Verriegelungsaussparung (54) des Kapselaufnahmesitzes (20) zusammenwirkt, so dass, wenn der Kapselaufnahmesitz (20) in die Kapselaufnahmeposition linearbewegt wird, die Sperrklinke (50) in die Verriegelungsaussparung (54) einrastet, um dadurch den Kapselaufnahmesitz (20) in der Kapselaufnahmeposition zu halten,
wobei optional der Deckel (14) einen vierten Mitnehmer (56) aufweist, der mit der Sperrklinke (50) zusammenwirkt, so dass, wenn der Deckel (14) von der zweiten Drehposition aus in die erste Drehposition gedreht wird, der vierte Mitnehmer (56) die Sperrklinke (50) veranlasst sich von der Verriegelungsaussparung (54) zu lösen, wodurch ermöglicht wird, dass sich der Kapselaufnahmesitz (20) von der Kapselaufnahmeposition aus in die Kapseleinsetzposition linearbewegt.

5. Kapselöffnereinheit (10) gemäß irgendeinem der vorhergehenden Ansprüche, wobei die Linearführungsvorrichtung (22) mindestens eine langgestreckte Stange (58) aufweist, an der der Kapselaufnahmesitz (20) auf eine Weise montiert ist, um von der langgestreckten Stange (58) entlang der linearen Bewegungsrichtung (D1) linear geführt zu sein, wobei optional eine Rückstellfeder (60) zwischen den Halterahmen (18) und den Kapselaufnahmesitz (20) geschaltet ist, um den Kapselaufnahmesitz (20) in Richtung zu der Kapseleinsetzposition vorzuspannen.

6. Kapselöffnereinheit (10) gemäß irgendeinem der vorhergehenden Ansprüche, wobei der erste Betätigungsarm (24) einen freien Endabschnitt (62) und einen Eingriffspfad (64) aufweist, um mit dem ersten Mitnehmer (26) in Eingriff zu sein, um zu ermöglichen, dass der erste Mitnehmer (26) mit dem ersten Betätigungsarm (24) über den Eingriffspfad (64) für die Drehung des ersten Betätigungsarms (24) zusammenwirkt, wobei sich der Eingriffspfad (64) zwischen der zweiten Drehachse (A2) und dem freien Endabschnitt (62) erstreckt und sich unter der ersten Drehachse (A1) erstreckt, entlang der linearen Bewegungsrichtung (D1) betrachtet, wobei, entlang einer Querrichtung betrachtet, die sowohl quer zu der ersten Drehachse (A1) als auch zu der linearen Bewegungsrichtung (D1) ist, die zweite Drehachse (A2) und der freie Endabschnitt (62) des ersten Betätigungsarms (24) auf gegenüberliegenden Seiten in Bezug auf die erste Drehachse (A1) angeordnet sind, und wobei der freie Endabschnitt (62) des ersten Betätigungsarms (24) konfiguriert ist, um mit einem ersten Eingriffsabschnitt (66) des Kapselaufnahmesitzes (20) in Eingriff zu sein, so dass, wenn der erste Betätigungsarm (24) durch den ersten Mitnehmer (26) veranlasst wird sich zu drehen, der erste Betätigungsarm (24) über den Eingriff zwischen seinem freien Endabschnitt (62) und dem ersten Eingriffsabschnitt (66) den Kapselaufnahmesitz (20) veranlasst sich von der Kapseleinsetzposition aus zu der Kapselaufnahmeposition linear zu bewegen.

7. Kapselöffnereinheit (10) gemäß Anspruch 6,
wobei der Eingriffspfad (64) des ersten Betätigungsarms (24) einen der ersten Drehachse (A1) zugewandten konkaven Verlauf hat, und/oder
wobei der erste Mitnehmer (26) einen Eingriffsvorsprung (68) und eine erste Mitnehmerfeder (70) aufweist, durch die der Eingriffsvorsprung (68) des ersten Mitnehmers (26) gegen den Eingriffspfad (64) des ersten Betätigungsarms (24) vorgespannt ist, und/oder
wobei eine Feder (72) zwischen den ersten Betätigungsarm (24) und den Einheit-Rahmen (12) geschaltet ist, durch die der erste Betätigungsarm (24) in Richtung zu einer Erster-Betätigungsarm-Ausgangsposition vorgespannt ist, die von dem ersten Betätigungsarm (24) eingenommen wird, wenn sich der Deckel (14) in der ersten Drehposition befindet, um dadurch einen Eingriff zwischen dem ersten Mitnehmer (26) und dem Eingriffspfad (64) des ersten Betätigungsarms (24), optional zwischen dem Eingriffsvorsprung (68) und dem Eingriffspfad (64) des ersten Betätigungsarms (24), aufrechtzuerhalten.

8. Kapselöffnereinheit (10) gemäß irgendeinem der vorhergehenden Ansprüche, wobei der zweite Betätigungsarm (28) einen freien Endabschnitt (74) und einen Eingriffspfad (76) aufweist, für einen Eingriff mit dem zweiten Mitnehmer (30), um zu ermöglichen, dass der zweite Mitnehmer (30) mit dem zweiten Betätigungsarm (28) über den Eingriffspfad (76) zusammenwirkt, für erstens das Drehen des zweiten Betätigungsarms (28) und das korrespondierende Drehen des Klemmarmabschnitts (32) in die Klemmposition, und zweitens zum Ermöglichen, dass der Klemmarmabschnitt (32) in der Klemmposition gehalten wird, wobei sich der Eingriffspfad (76) zwischen der dritten Drehachse (A3) und dem freien Endabschnitt (74) erstreckt und sich unter der zweiten Drehachse (A2) erstreckt, entlang der linearen Bewegungsrichtung (D1) betrachtet, wobei, entlang einer Querrichtung betrachtet, die sowohl quer zu der ersten Drehachse (A1) als auch zu der linearen Bewegungsrichtung (D1) ist, die dritte Drehachse (A3) und der freie Endabschnitt (74) auf gegenüberliegenden Seiten in Bezug auf die erste Drehachse (A1) angeordnet sind.

9. Kapselöffnereinheit (10) gemäß Anspruch 8,
wobei der Eingriffspfad (76) des zweiten Betätigungsarms (28) einen der ersten Drehachse (A1) zugewandten konkaven Verlauf aufweist, und/oder
wobei der zweite Mitnehmer (30) einen Eingriffsvorsprung (78) und eine zweite Mitnehmerfeder (80) aufweist, durch die der Eingriffsvorsprung (78) des zweiten Mitnehmers (30) gegen den Eingriffspfad (76) des zweiten Betätigungsarms (28) vorgespannt ist, und/oder
wobei eine Feder (82) zwischen den zweiten Betätigungsarm (28) und den Einheit-Rahmen (12) geschaltet ist, durch die der zweite Betätigungsarm (28) in Richtung zu einer Zweiter-Betätigungsarm-Ausgangsposition vorgespannt ist, die von dem zweiten Betätigungsarm (28) eingenommen wird, wenn sich der Deckel (14) in der ersten oder in der zweiten Drehposition befindet, um dadurch einen Eingriff zwischen dem zweiten Mitnehmer (30) und dem Eingriffspfad (76) des zweiten Betätigungsarms (28), optional zwischen dem Eingriffsvorsprung (78) des zweiten Mitnehmers (30) und dem Eingriffspfad (76) des zweiten Betätigungsarms (28), aufrechtzuerhalten.

10. Kapselöffnereinheit (10) gemäß irgendeinem der vorhergehenden Ansprüche,
wobei die Kapselöffnereinheit (10) ferner ein Magnetelement (84), das an dem Einheit-Rahmen (12) oder an der Kapselaufnahmeeinheit (16) angeordnet ist, und ein korrespondierendes Gegenelement (86) aufweist, das korrespondierend an der Kapselaufnahmeeinheit (16) oder an dem Einheit-Rahmen (12) angeordnet ist, wobei das Magnetelement (84) und das korrespondierende Gegenelement (86) zusammenwirken, um die Kapselaufnahmeeinheit (16) über Magnetkraft am Einheit-Rahmen (12) zu halten, wenn sich der Deckel (14) in irgendeiner von der ersten bis dritten Drehposition befindet, und um die Kapselaufnahmeeinheit (16) vom Einheit-Rahmen (12) freizugeben, wenn der Deckel (14) von der dritten Drehposition in Richtung zu seiner vierten Drehposition weitergedreht wird.

11. Kapselöffnereinheit (10) gemäß irgendeinem der vorangehenden Ansprüche, wobei die Kapselaufnahmeeinheit (16) ferner ein Zungenführungselement (88) aufweist, das fest an dem Halterahmen (18) montiert ist und von diesem in einer konkaven und/oder geneigten Weise zu dem Gegenstück (34) hin hervorsteht, um dadurch ein Führen der Zunge (302) der Kapselabdeckfolie (304) der Kapsel (300) auf das Gegenstück (34) zu ermöglichen, wenn der Kapselaufnahmesitz (20) von der Kapseleinsetzposition aus zu der Kapselaufnahmeposition linearbewegt wird, und wobei das Zungenführungselement (88) einen freien Endabschnitt (88a) aufweist, der in Richtung zu dem Gegenstück (34) ausgerichtet ist und in einer Gabelform mit zwei Gabelzinken (88b) vorgesehen ist, die durch eine Aussparung (88c) dazwischen im Abstand angeordnet sind.

12. Kapselöffnereinheit (10) gemäß irgendeinem der vorhergehenden Ansprüche,
wobei die Kapselöffnereinheit (10) ein Paar erster Betätigungsarme (24, 24a) aufweist, von denen einer der erste Betätigungsarm (24) ist, wie in irgendeinem der vorhergehenden Ansprüche beschrieben, und der andere in der Weise wie der eine erste Betätigungsarm (24) vorgesehen ist, wobei die ersten Betätigungsarme (24, 24a) voneinander getrennt sind oder integral miteinander verbunden sind und, entlang der zweiten Drehachse (A2) betrachtet, auf gegenüberliegenden Seiten in Bezug auf den Kapselaufnahmesitz (20) positioniert sind, wobei der andere erste Betätigungsarm (24a) mit einem weiteren ersten Mitnehmer (26a) des Deckels (14) in der Weise zusammenwirkt, wie der erste Betätigungsarm (24) mit dem ersten Mitnehmer (26) zusammenwirkt, wobei, sofern in Kombination mit Anspruch 6, der Kapselaufnahmesitz (20) ferner einen zweiten Eingriffsabschnitt (90) aufweist, der in der Weise wie der erste Eingriffsabschnitt (66) vorgesehen ist, um mit dem anderen ersten Betätigungsarm (24a) zusammenzuwirken, und/oder
wobei die Kapselöffnereinheit (10) ein Paar von zweiten Betätigungsarmen (28, 28a) aufweist, von denen einer der zweite Betätigungsarm (28) ist, wie in irgendeinem der vorhergehenden Ansprüche beschrieben, und der andere in der Weise wie der eine zweite Betätigungsarm (28) vorgesehen ist, wobei beide zweiten Betätigungsarme (28, 28a) fest an dem Klemmarmabschnitt (32) angebracht oder integral damit ausgebildet sind und, entlang der dritten Drehachse (A3) betrachtet, auf gegenüberliegenden Seiten in Bezug auf den Klemmarmabschnitt (32) angeordnet sind, wobei der andere zweite Betätigungsarm (28a) mit einem weiteren zweiten Mitnehmer (30a) des Deckels (14) in der Weise zusammenwirkt, wie der zweite Betätigungsarm (28) mit dem zweiten Mitnehmer (30) zusammenwirkt.

13. Kaffeemaschine (200), aufweisend die Kapselöffnereinheit (10) gemäß irgendeinem der vorhergehenden Ansprüche.

14. Kaffeemaschine (200) gemäß Anspruch 13, ferner aufweisend einen Trichter (202), der fest in der Kaffeemaschine (200) montiert ist und eine Trichteröffnung (204) aufweist, die angeordnet ist, um in der Lage zu sein, den Inhalt der Kapsel (300) aufzunehmen, der vertikal daraus herausfällt, wenn die Kapselabdeckfolie (304) automatisch von der Kapsel (300) abgezogen wird, die in dem Kapselaufnahmesitz (20) aufgenommen ist und in die Entleerungsposition gedreht wird.

15. Kaffeemaschine (200) gemäß Anspruch 13 oder 14 und eine oder mehrere Kapseln (300), wobei die jeweilige Kapsel (300) aufweist:
einen Kapselkörper (308) mit gegenüberliegenden Randabschnitten (306) an den Seiten und einem vorderen Randabschnitt (310), und
eine Kapselabdeckfolie (304) mit einer Zunge (302),
wobei der vordere Randabschnitt (310) gabelförmig ist und zwei Gabelzinken (312) aufweist, die durch eine Aussparung (314) dazwischen im Abstand voneinander angeordnet sind, und
wobei die Kapselabdeckfolie (304) auf dem vorderen Randabschnitt (310) aufliegt, so dass die Zunge (302) der Kapselabdeckfolie (304) die Aussparung (314) zwischen den Gabelzinken (312) bedeckt.

## Revendications

1. Unité dispositif d'ouverture de capsule (10) d'une machine à café (200), comprenant
un bâti d'unité (12),
un couvercle (14) qui est monté sur le bâti d'unité (12) de façon à pouvoir tourner par rapport au bâti d'unité (12) autour d'un premier axe de rotation (A1),
une unité de réception d'une capsule (16) qui comprend un bâti de support (18) qui est monté sur le bâti d'unité (12) de façon à pouvoir tourner par rapport au bâti d'unité (12) autour du premier axe de rotation (A1), et un siège de réception d'une capsule (20) qui est monté sur le bâti de support (18) par l'intermédiaire d'un dispositif de guidage linéaire (22) de façon à pouvoir tourner en commun avec le bâti de support (18), et à pouvoir se déplacer par rapport au bâti de support (18) d'une façon guidée linéairement le long d'une direction de déplacement linéaire (D1) qui est transversale par rapport au premier axe de rotation (A1),
un premier bras d'actionnement (24) qui est monté sur le bâti d'unité (12) de façon à pouvoir tourner par rapport au bâti d'unité (12) autour d'un deuxième axe de rotation (A2) parallèle au premier axe de rotation (A1), et qui coopère, d'une part, avec une première came (26) du couvercle (14) et, d'autre part, avec le siège de réception d'une capsule (20), de telle sorte que, lorsque le couvercle (14) tourne à partir d'une première position de rotation jusqu'à une deuxième position de rotation, la première came (26) provoque une rotation du premier bras d'actionnement (24), et, de ce fait, un déplacement linéaire du siège de réception d'une capsule (20) à partir d'une position d'insertion d'une capsule, dans laquelle il est possible d'insérer une capsule (300) dans le siège de réception d'une capsule (20), jusqu'à une position de réception d'une capsule, dans laquelle la capsule (300), quand elle est insérée, est finalement reçue dans le siège de réception d'une capsule (20) afin d'être traitée ensuite,
un second bras d'actionnement (28) qui est monté sur le bâti d'unité (12) afin de pouvoir tourner par rapport au bâti d'unité (12) autour d'un troisième axe de rotation (A3) parallèle au premier axe de rotation (A1) et qui, d'une part, coopère avec une deuxième came (30) du couvercle (14) et, d'autre part, présente une partie bras de serrage (32) destinée à coopérer avec une languette (302) d'une feuille d'aluminium d'un couvercle de capsule (304) de la capsule (300) reçue dans le siège de réception d'une capsule (20), de telle sorte que, lorsque le couvercle (14) tourne davantage à partir de la deuxième position de rotation jusqu'à une troisième position de rotation, la deuxième came (30) provoque une rotation du second bras d'actionnement (28), et, de ce fait, une rotation correspondante de la partie bras de serrage (32) vers une contre-empreinte (34), montée fixement sur le bâti d'unité (12), vers une position de serrage, dans laquelle la partie bras de serrage (32) peut serrer fixement ladite languette (302) contre ladite contre-empreinte (34),
dans laquelle le couvercle (14) présente une troisième came (36) qui peut coopérer avec une partie complémentaire (38) du bâti de support (18), dans laquelle, lorsque le couvercle (14) tourne davantage à partir de la troisième position de rotation jusqu'à une quatrième position de rotation, la deuxième came (30) coopère de plus avec le second bras d'actionnement (28), de telle sorte que la partie bras de serrage (32) soit maintenue dans sa position de serrage, et la troisième came (36) vient en prise avec la partie complémentaire (38) du bâti de support (18), de telle sorte que le bâti de support (18) tourne en commun avec le couvercle (14), en permettant de ce fait de retirer automatiquement la feuille d'aluminium d'un couvercle de capsule (304) de la capsule (300) reçue dans le siège de réception d'une capsule (20), et de faire tourner ladite capsule (300) dans une position d'évacuation, dans laquelle le contenu de ladite capsule (300) peut tomber verticalement de celle-ci.

2. Unité dispositif d'ouverture de capsule (10) selon la revendication 1, dans laquelle le bâti de support (18) présente des première et seconde rainures longitudinales (57a, 57b) formées à l'intérieur, destinées à coopérer avec des parties bords opposés (306) de la capsule (300), lesquelles rainures (57a, 57b) sont espacées l'une de l'autre dans une direction parallèle au premier axe de rotation (A1), et s'étendent parallèles à la direction de déplacement linéaire (D1) du siège de réception d'une capsule (20), et qui, lorsque la capsule (300) est insérée dans le siège de réception d'une capsule (20) dans la position d'insertion d'une capsule, peuvent recevoir lesdites parties bords (306) de la capsule (300), et peuvent les maintenir reçues lorsque le siège de réception d'une capsule (20) est déplacé linéairement à partir de la position d'insertion d'une capsule, vers la position de réception d'une capsule, afin d'empêcher de ce fait que la capsule (300) ne s'échappe du siège de réception d'une capsule (20) dans une direction transversale à la direction de déplacement linéaire (D1).

3. Unité dispositif d'ouverture de capsule (10) selon la revendication 1 ou 2, dans laquelle l'unité de réception d'une capsule (16) comprend en outre un premier bras de retenue (40) qui est monté sur le bâti de support (18) afin de pouvoir tourner par rapport au bâti de support (18) autour d'un quatrième axe de rotation (A4), qui, éventuellement, est transversal au premier axe de rotation (A1) et à ladite direction de déplacement linéaire (D1), et qui coopère avec une première came (42) du siège de réception d'une capsule (20) de telle sorte que, lorsque le siège de réception d'une capsule (20) se déplace linéairement à partir de la position d'insertion d'une capsule vers la position de réception d'une capsule, la première came (42) du siège de réception d'une capsule (20) fasse tourner le premier bras de retenue (40) à partir d'une position de réception d'une capsule, dans laquelle il est possible d'insérer la capsule (300) dans le siège de réception d'une capsule (20), vers une position de retenue de la capsule, dans laquelle la capsule (300), quand elle est insérée, est finalement reçue dans le siège de réception d'une capsule (20), et est empêchée, par le premier bras de retenue (40), de s'échapper du siège de réception d'une capsule (20), dans une direction parallèle à la direction de déplacement linéaire (D1).

4. Unité dispositif d'ouverture de capsule (10) selon l'une quelconque des revendications précédentes, comprenant en outre une unité de verrouillage (48) comprenant un verrou de verrouillage (50), qui est monté sur le bâti de support (18) afin de pouvoir se déplacer par rapport au bâti de support (18), éventuellement, de pouvoir tourner par rapport au bâti de support (18) autour d'un sixième axe de rotation (A6) parallèle au premier axe de rotation (A1), et d'être sollicité dans une direction de verrouillage par un ressort de verrouillage (52) de l'unité de verrouillage (48), dans laquelle le verrou de verrouillage (50) coopère avec un renfoncement de verrouillage (54) du siège de réception d'une capsule (20), de telle sorte que, lorsque le siège de réception d'une capsule (20) est déplacé linéairement dans la position de réception d'une capsule, le verrou de verrouillage (50) se verrouille dans le renfoncement de verrouillage (54) afin de retenir de ce fait le siège de réception d'une capsule (20) dans la position de réception d'une capsule,
dans laquelle, éventuellement, le couvercle (14) comprend une quatrième came (56) qui coopère avec le verrou de verrouillage (50) de telle sorte que, lorsque le couvercle (14) tourne à partir de la deuxième position de rotation vers la première position de rotation, la quatrième came (56) provoque la libération du verrou de verrouillage (50) du renfoncement de verrouillage (54), en permettant de ce fait au siège de réception d'une capsule (20) de se déplacer linéairement à partir de la position de réception d'une capsule, vers la position d'insertion d'une capsule.

5. Unité dispositif d'ouverture de capsule (10) selon l'une quelconque des revendications précédentes, dans laquelle le dispositif de guidage linéaire (22) comprend au moins une barre allongée (58), sur laquelle est monté le siège de réception d'une capsule (20), de manière à être guidé linéairement par la barre allongée (58) le long de la direction de déplacement linéaire (D1), dans laquelle, éventuellement, un ressort de rappel (60) est connecté entre le bâti de support (18) et le siège de réception d'une capsule (20) afin de solliciter le siège de réception d'une capsule (20) vers la position d'insertion d'une capsule.

6. Unité dispositif d'ouverture de capsule (10) selon l'une quelconque des revendications précédentes, dans laquelle le premier bras d'actionnement (24) comprend une partie extrémité libre (62) et un chemin de mise en prise (64) destiné à venir en prise avec la première came (26), afin de permettre à la première came (26) de coopérer avec le premier bras d'actionnement (24) par l'intermédiaire du chemin de mise en prise (64) de manière à faire tourner le premier bras d'actionnement (24), dans laquelle le chemin de mise en prise (64) s'étend entre le deuxième axe de rotation (A2) et la partie extrémité libre (62), et s'étend sous le premier axe de rotation (A1) quand on regarde le long de la direction de déplacement linéaire (D1), dans laquelle, quand on regarde le long d'une direction transversale qui est transversale par rapport au premier axe de rotation (A1) et à ladite direction de déplacement linéaire (D1), le deuxième axe de rotation (A2) et la partie extrémité libre (62) du premier bras d'actionnement (24) sont positionnés sur des bords opposés par rapport au premier axe de rotation (A1), et dans laquelle, la partie extrémité libre (62) du premier bras d'actionnement (24) est configurée afin de venir en prise avec une première partie de mise en prise (66) du siège de réception d'une capsule (20) de telle sorte que, lorsque la première came (26) provoque la rotation du premier bras d'actionnement (24), le premier bras d'actionnement (24), par l'intermédiaire de la mise en prise entre sa partie extrémité libre (62) et la première partie de mise en prise (66), provoque un déplacement linéaire du siège de réception d'une capsule (20) à partir de la position d'insertion d'une capsule vers la position de réception d'une capsule.

7. Unité dispositif d'ouverture de capsule (10) selon la revendication 6,
dans laquelle le chemin de mise en prise (64) du premier bras d'actionnement (24) présente un trajet concave qui fait face au premier axe de rotation (A1), et / ou
dans laquelle la première came (26) comprend une saillie de mise en prise (68) et un premier ressort de came (70), grâce auquel la saillie de mise en prise (68) de la première came (26) est sollicitée contre le chemin de mise en prise (64) du premier bras d'actionnement (24), et / ou
dans laquelle un ressort (72) est connecté entre le premier bras d'actionnement (24) et le bâti d'unité (12), grâce auquel le premier bras d'actionnement (24) est sollicité vers une première position initiale du bras d'actionnement, qui est occupée par le premier bras d'actionnement (24) lorsque le couvercle (14) se trouve dans la première position de rotation, afin de maintenir de ce fait une mise en prise entre la première came (26) et le chemin de mise en prise (64) du premier bras d'actionnement (24), éventuellement, entre la saillie de mise en prise (68) et le chemin de mise en prise (64) du premier bras d'actionnement (24).

8. Unité dispositif d'ouverture de capsule (10) selon l'une quelconque des revendications précédentes, dans laquelle le second bras d'actionnement (28) comprend une partie extrémité libre (74) et un chemin de mise en prise (76) destiné à venir en prise avec la deuxième came (30) afin de permettre à la deuxième came (30) de coopérer avec le second bras d'actionnement (28) par l'intermédiaire du chemin de mise en prise (76) afin, premièrement, de faire tourner le second bras d'actionnement (28), et, de faire tourner de manière correspondante la partie bras de serrage (32) vers la position de serrage et, deuxièmement, de permettre à la partie bras de serrage (32) d'être maintenue dans la position de serrage, dans laquelle le chemin de mise en prise (76) s'étend entre le troisième axe de rotation (A3) et la partie extrémité libre (74), et s'étend sous le deuxième axe de rotation (A2) quand on regarde le long de la direction de déplacement linéaire (D1), dans laquelle, quand on regarde le long d'une direction transversale qui est transversale au premier axe de rotation (A1) et à ladite direction de déplacement linéaire (D1), le troisième axe de rotation (A3) et la partie extrémité libre (74) sont positionnés sur des bords opposés par rapport au premier axe de rotation (A1).

9. Unité dispositif d'ouverture de capsule (10) selon la revendication 8,
dans laquelle le chemin de mise en prise (76) du second bras d'actionnement (28) présente un trajet concave qui fait face au premier axe de rotation (A1), et / ou
dans laquelle la deuxième came (30) comprend une saillie de mise en prise (78) et un second ressort de came (80), grâce auquel la saillie de mise en prise (78) de la deuxième came (30), est sollicitée contre le chemin de mise en prise (76) du second bras d'actionnement (28), et / ou
dans laquelle un ressort (82) est connecté entre le second bras d'actionnement (28) et le bâti d'unité (12), grâce auquel le second bras d'actionnement (28) est sollicité vers une seconde position initiale du bras d'actionnement, qui est occupée par le second bras d'actionnement (28) lorsque le couvercle (14) se trouve dans la première ou dans la seconde position de rotation, afin de maintenir de ce fait une mise en prise entre la deuxième came (30) et le chemin de mise en prise (76) du second bras d'actionnement (28), éventuellement, entre la saillie de mise en prise (78) de la deuxième came (30), et le chemin de mise en prise (64) du second bras d'actionnement (28).

10. Unité dispositif d'ouverture de capsule (10) selon l'une quelconque des revendications précédentes,
dans laquelle l'unité dispositif d'ouverture de capsule (10) comprend en outre un élément magnétique (84) qui est agencé sur le bâti d'unité (12) ou sur l'unité de réception d'une capsule (16), et un élément de contre-empreinte correspondant (86) qui est agencé sur l'unité de réception d'une capsule (16) ou sur le bâti d'unité (12), respectivement, dans laquelle l'élément magnétique (84) et l'élément de contre-empreinte correspondant (86), coopèrent de façon à tenir l'unité de réception d'une capsule (16) sur le bâti d'unité (12) par l'intermédiaire d'une force magnétique lorsque le couvercle (14) se trouve dans l'une quelconque des trois positions de rotation, et de façon à libérer l'unité de réception d'une capsule (16) du bâti d'unité (12), lorsque le couvercle (14) est tourné davantage à partir de la troisième position de rotation vers sa quatrième position de rotation.

11. Unité dispositif d'ouverture de capsule (10) selon l'une quelconque des revendications précédentes, dans laquelle l'unité de réception d'une capsule (16) comprend en outre un élément de guidage d'une languette (88) monté fixement sur le bâti de support (18), et qui fait saillie vers la contre-empreinte (34) d'une façon concave et / ou inclinée, afin de permettre de ce fait le guidage de la languette (302) de la feuille d'aluminium d'un couvercle de capsule (304) de la capsule (300) sur la contre-empreinte (34), lorsque le siège de réception d'une capsule (20) est déplacé linéairement à partir de la position d'insertion d'une capsule, vers la position de réception d'une capsule, et dans laquelle l'élément de guidage d'une languette (88) comprend une partie extrémité libre (88a) orientée vers la contre-empreinte (34), et disposée en forme de fourchette avec deux jambes de fourchette (88b) espacées entre elles par un renfoncement (88c).

12. Unité dispositif d'ouverture de capsule (10) selon l'une quelconque des revendications précédentes,
dans laquelle l'unité dispositif d'ouverture de capsule (10) comprend une paire de premiers bras d'actionnement (24, 24a), dont l'un est le premier bras d'actionnement (24) tel qu'il est décrit selon l'une quelconque des revendications précédentes, et l'autre est prévu de la même façon que celle dudit premier bras d'actionnement (24), dans laquelle lesdits premiers bras d'actionnement (24, 24a) sont séparés l'un de l'autre, ou sont connectés d'une pièce l'un à l'autre, et, quand on regarde le long du deuxième axe de rotation (A2), ils sont positionnés sur des bords opposés par rapport au siège de réception d'une capsule (20), dans laquelle ledit autre premier bras d'actionnement (24a) coopère avec une autre première came (26a) du couvercle (14) de la même façon que le premier bras d'actionnement (24) coopère avec la première came (26), dans laquelle, à condition que cette revendication soit associée à la revendication 6, le siège de réception d'une capsule (20) comprend en outre une seconde partie de mise en prise (90) prévue de la même manière que celle de la première partie de mise en prise (66), afin de coopérer avec ledit autre premier bras d'actionnement (24a), et / ou
dans laquelle l'unité dispositif d'ouverture de capsule (10) comprend une paire de seconds bras d'actionnement (28, 28a), dont l'un est le second bras d'actionnement (28) tel qu'il est décrit selon l'une quelconque des revendications précédentes, et l'autre est prévu de la même façon que celle dudit second bras d'actionnement (28), dans laquelle lesdits deux bras d'actionnement (28, 28a) sont fixés fixement à la partie bras de serrage (32) ou sont formés d'une pièce avec celle-ci, et, quand on regarde le long du troisième axe de rotation (A3), ils sont positionnés sur des bords opposés par rapport à la partie bras de serrage (32), dans laquelle ledit autre second bras d'actionnement (28a) coopère avec une autre deuxième came (30a) du couvercle (14) de la même façon que le second bras de commande (28) coopère avec la deuxième came (30).

13. Machine à café (200) comprenant l'unité dispositif d'ouverture de capsule (10) selon l'une quelconque des revendications précédentes.

14. Machine à café (200) selon la revendication 13, comprenant en outre un entonnoir (202) monté fixement à l'intérieur de la machine à café (200), et présentant une ouverture d'entonnoir (204) agencée afin de pouvoir recevoir le contenu de la capsule (300) qui tombe verticalement de celle-ci lorsque la feuille d'aluminium d'un couvercle de capsule (304) est retirée automatiquement de la capsule (300) reçue dans le siège de réception d'une capsule (20), et tournée dans la position d'évacuation.

15. Machine à café (200) selon la revendication 13 ou 14, et une ou plusieurs capsules (300), la capsule respective (300) comprenant
un corps de capsule (308) présentant des parties bords opposés (306) sur les côtés, et une partie bord avant (310), et
une feuille d'aluminium d'un couvercle de capsule (304) présentant une languette (302),
dans laquelle la partie bord avant (310) est en forme de fourchette, et présente deux jambes de fourchette (312) espacées entre elles par un renfoncement (314), et
dans laquelle la feuille d'aluminium d'un couvercle de capsule (304) repose sur la partie bord avant (310), de telle sorte que la languette (302) de la feuille d'aluminium d'un couvercle de capsule (304), couvre le renfoncement (314) entre les jambes de fourchette (312).
